(19) Europäisches Patentamt
European Patent Office
Office européen des brevets

(11) **EP 4 221 193 A1**

(12) **EUROPEAN PATENT APPLICATION**
published in accordance with Art. 153(4) EPC

(43) Date of publication:
**02.08.2023 Bulletin 2023/31**

(21) Application number: **21871003.6**

(22) Date of filing: **23.07.2021**

(51) International Patent Classification (IPC):
**H04N 7/14** (2006.01)

(52) Cooperative Patent Classification (CPC):
**H04L 65/40; H04L 65/60; H04N 7/14; H04N 21/43**

(86) International application number:
**PCT/CN2021/108137**

(87) International publication number:
**WO 2022/062625 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.09.2020 CN 202011025141**

(71) Applicant: **Huawei Technologies Co., Ltd.
Shenzhen, Guangdong 518129 (CN)**

(72) Inventors:
• **GAO, Yang**
  **Shenzhen, Guangdong 518129 (CN)**
• **LIANG, Yunkai**
  **Shenzhen, Guangdong 518129 (CN)**

(74) Representative: **MERH-IP Matias Erny Reichl Hoffmann
Patentanwälte PartG mbB
Paul-Heyse-Strasse 29
80336 München (DE)**

(54) **VIDEO CALL METHOD AND APPARATUS**

(57) This application discloses a video call method and an apparatus. In a scenario of a two-party video call or a multiparty video conference, functions of real-time drawing and annotation on video image content are supported, and another participant in the video call can view in real time content drawn by a drawer, to achieve an effect of "drawing while viewing", thereby helping improve quality of information transmission. A terminal device of a sender of a call collects drawing point data and multimedia data in real time, encapsulates the data in a data packet in real time, and sends the data packet to a receiver by using a media server. A timestamp and/or a sequence number are/is encapsulated in the data packet. The receiver can synchronize the drawing point data with the multimedia data based on the timestamp and/or the sequence number, so that the receiver can view a drawing pattern in real time and hear a voice of a user of the sender. In this way, quality and efficiency of information transmission are improved.

FIG. 4A

**(Cont. next page)**

CONT. FROM
FIG. 4A

CONT. FROM
FIG. 4A

CONT. FROM
FIG. 4A

CONT. FROM
FIG. 4A

CONT. FROM
FIG. 4A

406. Audio data
stream and
drawing point
data stream

407. Audio data
stream and
drawing point
data stream

408. Audio data
stream and
drawing point
data stream

405. The first
terminal device
renders a user
drawing pattern based
on the drawing point
data, displays the user
drawing pattern, and
plays user audio data

409. Perform
synchronization
processing based on a time
parameter of an audio data
packet included in the
audio data stream and a
time parameter of a
drawing point data packet
included in the drawing
point data stream

410. Render the drawing
point data included in the
drawing point data packet
as the user drawing
pattern, play, based on a
synchronization
processing result of the
audio data packet and the
drawing point data packet,
the audio data included in
the audio data packet, and
display the user drawing
pattern

FIG. 4B

# Description

This application claims priority to Chinese Patent Application No. 202011025141.0, filed with the China National Intellectual Property Administration on September 25, 2020 and entitled "VIDEO CALL METHOD AND APPARATUS", which is incorporated herein by reference in its entirety.

## TECHNICAL FIELD

Embodiments of this application relate to the field of communication technologies, and in particular, to a video call method and an apparatus.

## BACKGROUND

Currently, video calls are an effective way to communicate and interact. In addition to providing a voice and video image content of each participant in a video call, a video call technology also provides a whiteboard drawing function. However, currently, when a drawer starts to draw and in a drawing process, another participant in the video call cannot view a drawing result in real time, and the drawing result can be viewed by the another participant in the video call only after the drawer stops drawing. In other words, the drawer and the another participant in the video call cannot synchronously view the drawing result. Consequently, the another participant in the video call cannot learn in time of content that the drawer wants to express. Quality of communication and interaction is reduced, and efficiency is low.

## SUMMARY

Embodiments of this application provide a video call method and an apparatus, to improve quality of communication and interaction and improve efficiency.

According to a first aspect, an embodiment of this application provides a video call method, including: A media server receives a first data stream from a first terminal device, where a data packet in the first data stream includes drawing point data of a user drawing pattern collected by the first terminal device; the media server receives a second data stream from the first terminal device, where a data packet in the second data stream includes user audio data and/or user video data of the first terminal device; the media server synchronizes the first data stream with the second data stream based on a time parameter of the data packet in the first data stream and a time parameter of the data packet in the second data stream to obtain a synchronization processing result; and when the data packet in the second data stream includes the user audio data, the media server renders the drawing point data in the data packet in the first data stream based on the synchronization processing result to obtain the user drawing pattern, and sends the user drawing pattern and the second data stream to a second terminal device; or when the data packet in the second data stream includes the user video data, the media server renders the drawing point data in the data packet in the first data stream based on the synchronization processing result to obtain the user drawing pattern, renders the user video data in the data packet in the second data stream based on the synchronization processing result to obtain a user video image, overlays the user drawing pattern on the user video image to obtain a third data stream, and sends the third video stream to a second terminal device.

In the foregoing solution, the media server receives the drawing point data, the user audio data, and the user video data from the terminal device in real time, and then synchronizes the drawing point data, the audio data, and the video data. The media server renders the user video data and the drawing point data, so that the terminal device does not need to perform rendering, thereby reducing a hardware requirement on the terminal device. In addition, the terminal device sends the drawing point data, the audio data, and the video data to the media server in real time. After performing synchronization processing, the media server sends the drawing point data, the audio data, and the video data to the second terminal device, so that the second terminal device can synchronously display the drawing point data and the video data and play the audio data in real time. In this way, an image viewed by a user of the second terminal device is synchronized with a sound heard by the user, to improve quality of communication and interaction between users, and improve communication efficiency.

In a possible design, a rate at which the media server renders a drawing point of the user drawing pattern is the same as a rate at which the first terminal device collects the drawing point of the user drawing pattern. In the foregoing solution, the sound heard by the user is further synchronized with the drawing pattern viewed by the user.

In a possible design, when a sampling frequency of the first data stream is different from a sampling frequency of the second data stream, that the media server synchronizes the first data stream with the second data stream based on a time parameter of the data packet in the first data stream and a time parameter of the data packet in the second data stream includes:

When the time parameter includes a timestamp, the media server synchronizes the data packet in the first data stream with the data packet in the second data stream based on a timestamp and a first timestamp increment of the data packet in the first data stream and a timestamp and a second timestamp increment of the data packet in the second data stream, where the first timestamp increment is a difference between timestamps of two adjacent data packets belonging to the first data stream, and the second timestamp increment is a difference between timestamps of two adjacent data packets belonging to the second data stream; or when the time parameter includes a sequence number, the media server synchronizes the data packet in the first data stream with the data packet in the second data stream based on a sequence number of the data packet in the first data stream, a sequence number of the data packet in the second data stream, and a sequence number increment, where the sequence number increment is determined based on the sampling frequency of the first data stream and the sampling frequency of the second data stream.

The foregoing design provides two feasible synchronization manners.

In a possible design, the method further includes: The media server stores a received data packet belonging to the first data stream in a receive buffer. The rendering the drawing point data in the data packet in the first data stream to obtain the user drawing pattern includes: The media server obtains a first data packet belonging to the first data stream from the receive buffer, and renders drawing point data of the first data packet as a first drawing point of the user drawing pattern; predicts, when a second data packet belonging to the first data stream is not obtained from the receive buffer at the rate at which the media server renders the drawing point of the user drawing pattern, drawing point data of the second data packet based on first N data packets on which rendering has been performed, where a sequence number of the second data packet is adjacent to a sequence number of the first data packet, and the sequence number of the second data packet is greater than the sequence number of the first data packet or a time threshold of an interval between a timestamp of the second data packet and a timestamp of the first data packet, where the time threshold is determined based on the sampling frequency of the first data stream and the sampling frequency of the second data stream; and renders the predicted drawing point data of the second data packet as a second drawing point of the user drawing pattern.

Lost drawing point data is predicted in a data prediction manner. Further, when a pattern is drawn, the predicted drawing point data is used for replacing a lost drawing point data packet, to prevent a drawing result from being deviated.

In a possible design, after the predicted drawing point data of the second data packet is rendered as the second drawing point of the user drawing pattern, the method further includes: replacing, when the second data packet is received, the second drawing point with a drawing point rendered based on the drawing point data of the received second data packet.

In the foregoing design, drawing point data with delayed arrival is predicted in a data prediction manner, to ensure that the rate of rendering the drawing point data is the same as the rate of collecting the drawing point. Further, when a pattern is drawn, the predicted drawing point data is first rendered. When the drawing point data with delayed arrival is subsequently received, correction processing may be performed on the predicted drawing point data with a deviation.

In a possible design, the first data stream is a real-time transport protocol RTP stream, and the second data stream is an RTP stream; or the first data stream is a real-time transport control protocol RTCP stream, and the second data stream is an RTCP stream.

According to a second aspect, an embodiment of this application provides a video call method, including: A second terminal device receives a first data stream from a media server, where a data packet in the first data stream includes drawing point data of a user drawing pattern collected by a first terminal device; the second terminal device receives a second data stream from the media server, where a data packet in the second data stream includes user audio data and/or user video data of the first terminal device; the second terminal device synchronizes the first data stream with the second data stream based on a time parameter of the data packet in the first data stream and a time parameter of the data packet in the second data stream to obtain a synchronization processing result; and when the data packet in the second data stream includes the user audio data, the second terminal device renders the drawing point data in the data packet in the first data stream based on the synchronization processing result to obtain the user drawing pattern, displays the user drawing pattern, and plays user audio; or when the data packet in the second data stream includes the user video data, the second terminal device renders the drawing point data in the data packet in the first data stream based on the synchronization processing result to obtain the user drawing pattern, renders the user video data in the data packet in the second data stream based on the synchronization processing result to obtain a user video image, and overlays the user drawing pattern on the user video image for display.

In the foregoing solution, the second terminal device receives the drawing point data, the user audio data, and the user video data from the first terminal device in real time, and then synchronizes the drawing point data, the audio data, and the video data, so that the second terminal device can synchronously display the drawing point data and the video data and play the audio data in real time. In this way, an image viewed by a user of the second terminal device is synchronized with a sound heard by the user, to improve quality of communication and interaction between users, and improve communication efficiency.

In a possible design, a rate at which the second terminal device renders a drawing point of the user drawing pattern is the same as a rate at which the first terminal device collects the drawing point of the user drawing pattern.

In a possible design, when a sampling frequency of the first data stream is different from a sampling frequency of the second data stream, that the second terminal device synchronizes the first data stream with the second data stream based on a time parameter of the data packet in the first data stream and a time parameter of the data packet in the second data stream includes:

When the time parameter includes a timestamp, the second terminal device synchronizes the data packet in the first data stream with the data packet in the second data stream based on a timestamp and a first timestamp increment of the data packet in the first data stream and a timestamp and a second timestamp increment of the data packet in the second data stream, where the first timestamp increment is a difference between timestamps of two adjacent data packets belonging to the first data stream, and the second timestamp increment is a difference between timestamps of two adjacent data packets belonging to the second data stream; or

when the time parameter includes a sequence number, the second terminal device synchronizes the data packet in the first data stream with the data packet in the second data stream based on a sequence number of the data packet in the first data stream, a sequence number of the data packet in the second data stream, and a sequence number increment, where the sequence number increment is determined based on the sampling frequency of the first data stream and the sampling frequency of the second data stream.

In a possible design, the method further includes:

The second terminal device stores a received data packet belonging to the first data stream in a receive buffer.

That the second terminal device renders the drawing point data in the data packet in the first data stream to obtain the user drawing pattern includes:

The second terminal device obtains a first data packet belonging to the first data stream from the receive buffer, and renders the drawing point data of the first data packet as a first drawing point of the user drawing pattern; predicts, when a second data packet belonging to the first data stream is not obtained from the receive buffer at the rate at which the second terminal device renders the drawing point of the user drawing pattern, drawing point data of the second data packet based on first N data packets that belong to the first data stream and on which rendering has been performed, where

a sequence number of the second data packet is adjacent to a sequence number of the first data packet, and the sequence number of the second data packet is greater than the sequence number of the first data packet or a time threshold of an interval between a timestamp of the second data packet and a timestamp of the first data packet, where the time threshold is determined based on the sampling frequency of the first data stream and the sampling frequency of the second data stream; and renders the predicted drawing point data of the second data packet as a second drawing point of the user drawing pattern.

In a possible design, after the predicted drawing point data of the second data packet is rendered as the second drawing point of the user drawing pattern, the method further includes:

replacing, when the second data packet is received, the second drawing point with a drawing point rendered based on the drawing point data of the received second data packet.

In a possible design, the first data stream is a real-time transport protocol RTP stream, and the second data stream is an RTP stream; or the first data stream is a real-time transport control protocol RTCP stream, and the second data stream is an RTCP stream.

According to a third aspect, an embodiment of this application provides a video call method, including: A first terminal device collects, in response to a drawing operation for a user drawing pattern of the first terminal device, a drawing point of the user drawing pattern in real time to obtain drawing point data; the first terminal device collects multimedia data in real time, where the multimedia data includes user audio data of the first terminal device or user video data of the first terminal device; the first terminal device encapsulates the drawing point data of the user drawing pattern collected in real time into a data packet belonging to a first data stream, and encapsulates the multimedia data collected in real time into a data packet belonging to a second data stream, where the data packet in the first data stream includes the drawing point data of the user drawing pattern, the data packet in the second data stream includes the user audio data or the user video data of the first terminal device, the data packet in the first data stream carries a first timestamp, and the data packet in the second data stream carries a second timestamp, where the first timestamp and the second timestamp are determined based on a sampling frequency of the drawing point of the user drawing pattern and a sampling frequency of the user video data or the user audio data encapsulated in the second data packet; and the first terminal device sends the first data stream and the second data stream to a media server by using a session border controller SBC.

In the foregoing solution, the first terminal device of a sender collects the drawing point data and the multimedia data in real time, and encapsulates the data into the data packets during collection, where a timestamp for implementing synchronization is encapsulated in the data packet. Further, a second terminal device of a receiver may synchronously generate the drawing point data and the multimedia data based on the timestamps, so that the displayed user drawing pattern and heard audio are synchronized.

In a possible implementation, the method further includes: The first terminal device renders the drawing point data to obtain the user drawing pattern, and displays the user drawing pattern.

In a possible implementation, the method further includes: The first terminal device receives a first user drawing pattern from the media server by using the SBC, where the first user drawing pattern is obtained by the media server by rendering the drawing point data in the data packet in the first data stream; and the first terminal device displays the first user drawing pattern.

In a possible implementation, before the first terminal device receives the first user drawing pattern from the media server by using the SBC, the method further includes: The first terminal device renders the drawing point data to obtain a second user drawing pattern, and displays the second user drawing pattern; and the first terminal device displays the first user drawing pattern after receiving the first user drawing pattern from the media server by using the SBC, where the displayed first user drawing pattern covers the second user drawing pattern.

In an example, a color and/or a style of the second user drawing pattern may be different from a color and/or a style of the first user drawing pattern. A user of the first terminal device may determine, based on a displayed user drawing pattern, a user drawing pattern displayed by each video call party. Further, the user of the first terminal device may adjust a speed of describing content of the user drawing pattern, so that each video call party can accurately learn of the content described by the user of the first terminal device. In this way, user experience is improved.

In a possible design, the first data stream is a real-time transport protocol RTP stream, and the second data stream is an RTP stream; or the first data stream is a real-time transport control protocol RTCP stream, and the second data stream is an RTCP stream.

According to a fourth aspect, an embodiment of this application further provides a communication apparatus, and the communication apparatus is applied to a media server. For beneficial effects, refer to the descriptions of the first aspect. Details are not described herein again. The apparatus has a function of implementing behavior in the method instance in the first aspect. The function may be implemented by hardware, or may be implemented by hardware executing corresponding software. The hardware or the software includes one or more modules corresponding to the foregoing function. In a possible design, a structure of the apparatus may include a communication unit and a processing unit. These units may perform corresponding functions in the method example in the first aspect. For details, refer to the detailed descriptions in the method example. Details are not described herein again.

According to a fifth aspect, an embodiment of this application further provides a communication apparatus, and the apparatus is applied to a terminal device. For beneficial effects, refer to the descriptions of the second aspect or the third aspect. Details are not described herein again. The apparatus has a function of implementing behavior in the method instance in the second aspect or the third aspect. The function may be implemented by hardware, or may be implemented by hardware executing corresponding software. The hardware or the software includes one or more modules corresponding to the foregoing function. In a possible design, a structure of the apparatus may include a display unit, a communication unit, and a processing unit, and may further include a playback unit and a collection unit. These units may perform corresponding functions in the method example in the second aspect or the third aspect. For details, refer to the detailed descriptions in the method example. Details are not described herein again.

According to a sixth aspect, an embodiment of this application further provides a communication apparatus, and the apparatus is applied to a media server. For beneficial effects, refer to the descriptions of the first aspect. Details are not described herein again. A structure of the communication apparatus includes a processor and a communication interface, and may further include a memory. The processor is configured to support the media server in performing a corresponding function in the method in the first aspect through the communication interface. The memory is coupled to the processor, and stores program instructions and data that are necessary for the communication apparatus.

According to a seventh aspect, an embodiment of this application further provides a communication apparatus, and the apparatus is applied to a terminal device. For beneficial effects, refer to the descriptions of the second aspect or the third aspect. Details are not described herein again. A structure of the communication apparatus includes a processor and a communication interface, and may further include a memory. The processor is configured to support the terminal device in performing a corresponding function in the method in the second aspect or the third aspect through the communication interface. The memory is coupled to the processor, and stores program instructions and data that are necessary for the communication apparatus.

According to an eighth aspect, this application further provides a computer-readable storage medium, where the computer-readable storage medium stores instructions. When the instructions are run on a computer, the computer is enabled to perform the method according to any one of the foregoing aspects.

According to a ninth aspect, this application further provides a computer program product including instructions. When the instructions are run on a computer, the computer is enabled to perform the method according to any one of the foregoing aspects.

According to a tenth aspect, this application further provides a computer chip, where the chip is connected to a memory, and the chip is configured to read and execute a software program stored in the memory, to perform the method according to any one of the foregoing aspects.

## BRIEF DESCRIPTION OF DRAWINGS

FIG. 1 is a schematic diagram of an architecture of a communication system according to an embodiment of this application;

FIG. 2 is a schematic diagram of an architecture of another possible communication system according to an embodiment of this application;

FIG. 3 is a schematic diagram of a hardware structure of a terminal device according to an embodiment of this application;

FIG. 4A and FIG. 4B are a schematic flowchart of a possible video call according to an embodiment of this application;

FIG. 5A is a schematic diagram of a possible call user interface on a terminal device according to an embodiment of this application;

FIG. 5B is a schematic diagram of another possible call user interface on a terminal device according to an embodiment of this application;

FIG. 5C is a schematic diagram of a possible display user interface on a terminal device according to an embodiment of this application;

FIG. 5D is a schematic diagram of another possible display user interface on a terminal device according to an embodiment of this application;

FIG. 6 is a schematic diagram of timestamps and sequence numbers of an encapsulated drawing point data packet and audio data packet according to an embodiment of this application;

FIG. 7 is a schematic diagram of timestamps and sequence numbers of a drawing point data packet and an audio data packet that are synchronized according to an embodiment of this application;

FIG. 8 is a schematic display diagram of a lost drawing point and a predicted drawing point in a user drawing pattern according to an embodiment of this application;

FIG. 9A and FIG. 9B are a schematic flowchart of another possible video call according to an embodiment of this application;

FIG. 10 is a schematic display diagram of a drawing gap caused by a delay according to an embodiment of this application;

FIG. 11 is a schematic diagram of a structure of a communication apparatus 1100 according to an embodiment of this application;

FIG. 12 is a schematic diagram of a structure of a communication apparatus 1200 according to an embodiment of this application;

FIG. 13 is a schematic diagram of a structure of a communication apparatus 1300 according to an embodiment of this application;

FIG. 14 is a schematic diagram of a structure of a communication apparatus 1400 according to an embodiment of this application; and

FIG. 15 is a schematic diagram of a structure of a communication apparatus 1500 according to an embodiment of this application.

## DESCRIPTION OF EMBODIMENTS

In a video call scenario, to improve communication quality and call efficiency, a participant in the video call may draw content or add an annotation. However, currently, when a drawer starts to draw and in a drawing process, another participant in the video call cannot view a drawing result in real time, and the drawing result can be viewed by the another participant in the video call only after the drawer stops drawing. In other words, the drawer and the another participant in the video call cannot synchronously view the drawing result. Therefore, in a scenario of remote guidance or collaboration, the another participant cannot clearly learn of content that the drawer wants to express or an object that the drawer wants to act on, causing low quality of communication and interaction and low efficiency.

Based on this, embodiments of this application provide a video call method and an apparatus. In a scenario of a two-party video call or a multi-party video conference, functions of real-time drawing and annotation on video image content are supported, and another participant in the video call can view in real time content drawn by a drawer, to achieve an effect of "drawing while viewing", thereby helping improve quality of information transmission. An information transmission channel for the video call or the video conference is added, facilitating remote guidance or remote collaboration between two or more parties in the call.

The video call may use, but is not limited to, a voice over long term evolution (Voice over Long-Term Evolution, VoLTE) or a social application (application, APP), and may be further for a voice over new radio (Voice over New Radio, VoNR) video call. In the following descriptions, an example in which the video call uses the VoLTE is used. Embodiments of this application are applicable to a scenario of a two-party video call, and are further applicable to a scenario of a multi-party video call or a multi-party video conference.

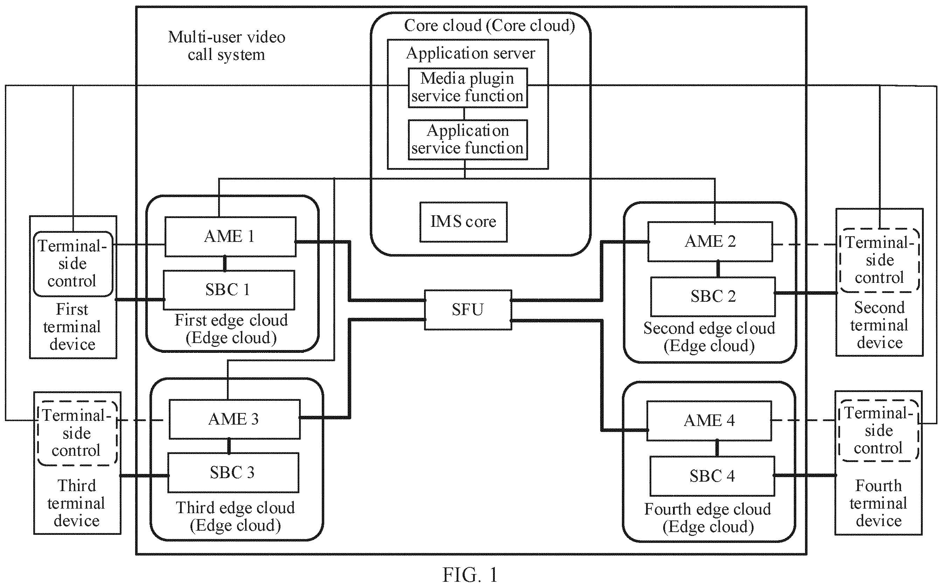

FIG. 1 is a schematic diagram of an architecture of a communication system according to an embodiment of this application. The communication system includes one or more session border controllers (session border controllers, SBCs) and one or more media servers. The communication system may implement a video call and/or an audio call.

The session border controller may be referred to as a border gateway. The media server may also be referred to as an AR media server, or may be referred to as an AR media enabler (AR media enabler, AME). Two or more terminal devices may perform a voice or video call by using the communication system, and in a voice or video call process, the AR media enabler performs media processing on a media stream generated in the voice or video call process. The media stream may include a user video generated in the video call process, and may further include a voice. The user video may include a video collected by a camera (a front-facing camera or a rear-facing camera) of a terminal device used by a user, a file opened by a user, a profile of a user, or the like. For example, the AR media enabler has a strong image processing function and data calculation function, and can use an AR technology to perform operations such as logic operation, image rendering, or virtual scene synthesis on the received media stream. The AR media server may be deployed in a form of a container service. The AR media server may alternatively be implemented by using one or more virtual machines. The AR media server may further include one or more processors, or may be implemented by using one or more computers, for example, an ultra-multi-core computer, a computer deployed with a graphics processing unit (graphics processing unit, GPU) cluster, a large-scale distributed computer, or a cluster computer with hardware resource pooling. The SBC is configured to manage or control a session of the terminal device. The SBC includes a signaling plane function and a media plane function. For example, the SBC may be configured to receive the media stream from the terminal device managed by the SBC, and send the media stream received from the terminal device to the AR media server. The AR media server is configured to perform media processing on a received uplink media stream to obtain a downlink video stream. The uplink media stream includes the media stream from the terminal device. In a multi-user video call scenario, the uplink media stream may include media streams from a plurality of terminal devices. The downlink video stream may be sent by the AR media server to a corresponding terminal device by using the SBC. The terminal device is a device with a video call function, for example, may be a terminal device configured with the camera. For example, the terminal device may be a wearable device (for example, an electronic watch), or the terminal device may be a device such as a mobile phone or a tablet computer. A specific form of the terminal device is not specially limited in embodiments of this application.

In FIG. 1, three SBCs are used as an example: an SBC 1, an SBC 2, an SBC 3, and an SBC 4. Different SBCs manage different terminal devices. In an example, the SBC 1 manages a first terminal device, the SBC 2 manages a second terminal device, the SBC 3 manages a third terminal device, and the SBC 4 manages a fourth terminal device . Different terminal devices ma y alternatively be managed by a same SBC. For example, the SBC 1 may be further configured to manage a fifth terminal device (not shown in FIG. 1). The SBC is deployed on an edge node. The four SBCs are separately deployed on different edge nodes. The AR media server may be deployed on an edge node, or may be deployed on a central node. In FIG. 1, an example in which the AR media server and the SBC are deployed on edge nodes is used. In FIG. 1, four AMEs are used as an example: an AME 1, an AME 2, an AME 3, and an AME 4. Compared with the central node, the edge node is closer to users of terminal devices, and provides an edge computing service, a forwarding service, or the like for these users, to reduce a response delay and bandwidth costs, and reduce pressure on the central node. Optionally, the central node and the edge node may be deployed on clouds. In this case, the central node may be referred to as a core cloud, and the edge node may be referred to as an edge cloud. For differentiation, in FIG. 1, the SBC 1 and the AME 1 are deployed on a first edge cloud, the SBC 2 and the AME 2 are deployed on a second edge cloud, the SBC 3 and the AME 3 are deployed on a third edge cloud, the SBC 4 and the AME 4 are deployed on a fourth edge cloud. The first edge cloud provides a service for the first terminal device, the second edge cloud provides a service for the second terminal device, the third edge cloud provides a service for the third terminal device, and the fourth edge cloud provides a service for the fourth terminal device. For example, the edge node may alternatively be a mobile edge computing (Mobile Edge Computing, MEC) node. It can be understood that the edge cloud may provide services for a plurality of terminal devices, that is, the plurality of terminal devices belong to one edge cloud. In FIG. 1, only an example in which four terminal devices belong to different edge clouds is used. In an example, the system further includes a fourth terminal device, and the fourth terminal device belongs to the fourth edge cloud (not shown in FIG. 1).

Notably, functions of the AR media server and the SBC may be jointly deployed in the edge cloud, or may be independently deployed. This is not limited in this embodiment of this application.

For example, the communication system may further include an application server. The application server is configured to establish a video call under the trigger of a terminal device. For example, an example of a video call between the first terminal device and the second terminal device is used. The application server receives information (for example, an operation indication on a call user interface) from the first terminal device, and the application server sends the received information to the AR media server, so that the AR media server processes the uplink media stream based on the information from the first terminal device.

In an example, refer to FIG. 1. The application server may include a media plugin service function, which may also be referred to as a plugin service (Plugin service) or a plugin server (Plugin server) for short. The application server further includes an application service (APP service, AS) function. The media plugin service function is for interacting with a terminal device. In the multi-user video call scenario, information or data triggered by a plurality of terminal devices is received, the received information or data is correspondingly processed to obtain processed information or data of the different terminal devices, and the processed information or data of the different terminal devices is sent to the application service function. The application service function is configured to interact with the AR media server, and separately send the data or information processed by the media plugin service function for the different terminal devices to AR media servers corresponding to the different terminal devices. Then, the AR media servers process the uplink media stream based on the processed data or information that is of the terminals and that is sent by the media plugin service function.

Notably, when deployed, the media plugin service function and the AS may be independently deployed, or may be jointly deployed. For example, the media plugin service function and the AS are implemented by one device or by one or more virtual machines.

In some embodiments, an IP multimedia subsystem (IP multimedia subsystem, IMS) core (core) may be further deployed on the core cloud. The IMS core may include a call session control function (call session control function, CSCF) and a home subscriber server (home subscriber server, HSS). The IMS core may further include another network element. Details are not further described in this embodiment of this application. The CSCF is a call control center of the IMS core, and implements functions such as user access, authentication, session routing, and service triggering on an IP transmission platform. The CSCF may include one or more of a serving-call session control function (serving-call session control function, S-CSCF), a proxy-CSCF (Proxy-CSCF, P-CSCF), and an interrogating-CSCF (Interrogating-CSCF, I-CSCF). The HSS is configured to record subscription data (such as user information and service data) of a user. As shown in FIG. 1, the SBC (including the SBC 1, the SBC 2, and the SBC 3) provides a border control function between an access network and the IMS core and between IMS cores, and may provide functions such as access control, quality of service (quality of service) control, and firewall traversal.

In some embodiments, a terminal-side control (which may be referred to as a terminal-side plugin) may be deployed in the terminal device. The device-side control is configured to exchange a message with the media plugin service function on a network side. The device-side control may further establish an auxiliary transmission channel with the AR media enabler. The auxiliary transmission channel is used by the terminal device to send an auxiliary media stream to the AR media enabler, or is used by the AR media enabler to send an auxiliary media stream to the terminal device. For example, the auxiliary media stream may include drawing point data of a user drawing pattern. The auxiliary media stream may further include one or more of point cloud data, spatial data (which may also be referred to as spatial pose data), a user perspective video, or a virtual model. The point cloud data is data recorded in a point form. Each point may include spatial location information, and may further include color information, reflection intensity information, or the like. The spatial data may also be referred as geometric data, is for representing information about a location, a shape, a size distribution, and the like of an object, and is a quantitative description of a thing and a phenomenon with positioning significance in the current world. The virtual model may include, for example, one or more of a virtual portrait model, a virtual object model, a material image (such as a sticker or a cartoon avatar), or a virtual animation model. The user perspective video may be, for example, a video collected by the user by using the rear-facing camera of the terminal device, or a video collected by using the front-facing camera of the terminal device.

In this embodiment of this application, the terminal device may establish different auxiliary transmission channels based on a type of the transmitted auxiliary media stream. For example, an auxiliary transmission channel 1 is established when the point cloud data needs to be transmitted, and an auxiliary transmission channel 2 is established when drawing data needs to be transmitted. The auxiliary transmission channel 2 for transmitting the drawing data may also be referred to as an action channel, or may use another name. This is not limited in this embodiment of this application. The terminal device may alternatively transmit different types of auxiliary media streams by using one auxiliary transmission channel.

Optionally, the communication system may further include a selective forwarding unit (selective forwarding unit, SFU). The SFU is configured to forward media streams of different edge clouds. The selective forwarding unit may be a forwarding server.

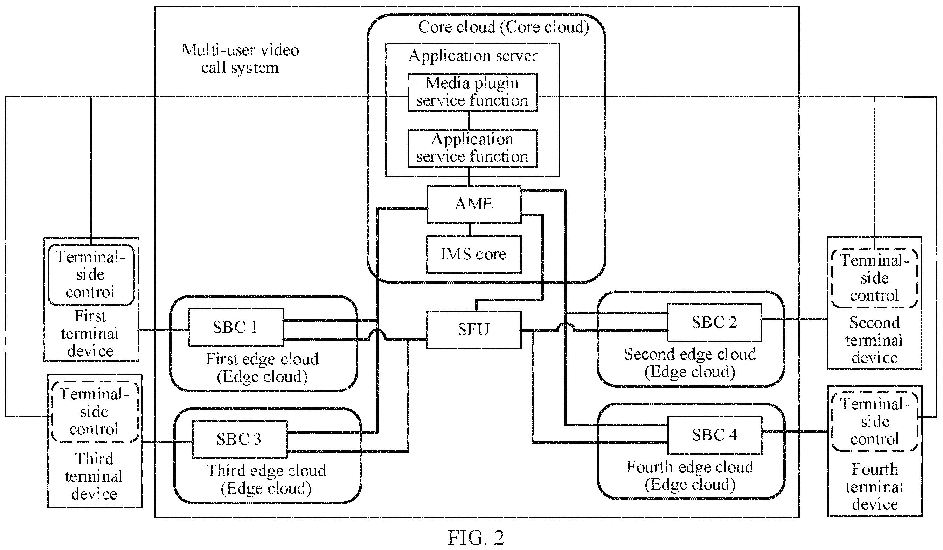

In an example, an AR media server may be deployed in a core cloud, as shown in FIG. 2. The AR media server provides services for different terminal devices.

Notably, edge nodes corresponding to different terminal devices may be the same or different. In addition, central nodes corresponding to different terminal devices may be the same or different. AR media servers corresponding to different terminal devices may be the same or different. CSCFs corresponding to different terminals may be the same or different.

All terminal devices in embodiments of this application, for example, the first terminal device to the third terminal device, support a video call, for example, support a VoLTE or voice over new radio (voice over new radio, VoNR), or are provided with a social application (application, APP). The terminal device may be a device that provides video shooting and data connectivity for a user, for example, a mobile phone (or referred to as a "cellular" phone), or a smartphone, or may be a portable, pocket-sized, handheld, and wearable device (such as a smartwatch), a tablet computer, a personal computer (personal computer, PC), or a vehicle-mounted computer.

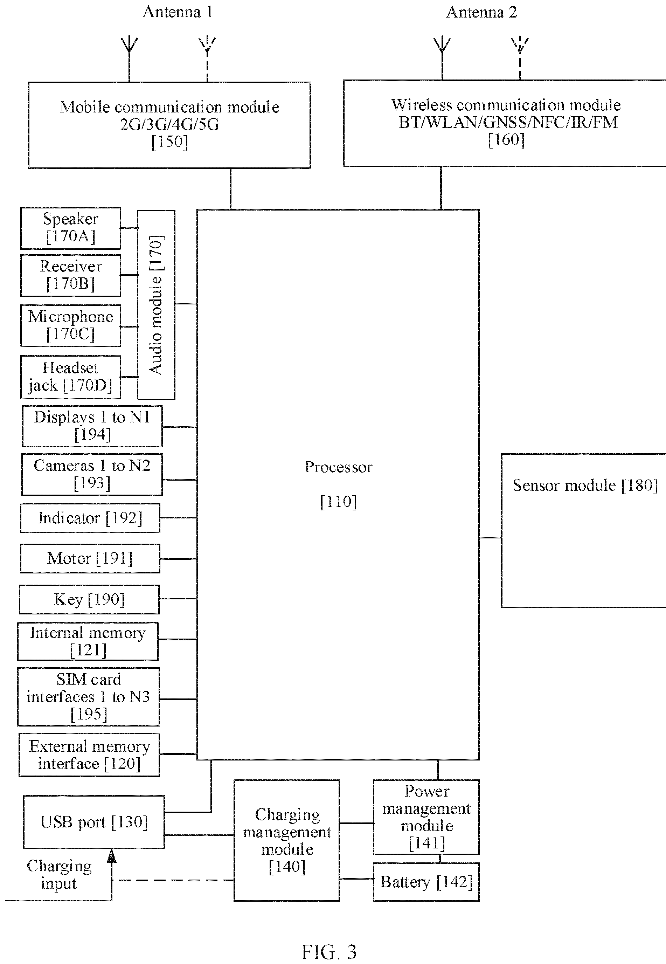

FIG. 3 is a schematic diagram of an optional hardware structure of a terminal device.

The terminal device may include a processor 110, an external memory interface 120, an internal memory 121, a universal serial bus (universal serial bus, USB) port 130, a charging management module 140, a power management module 141, abattery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identity module (subscriber identity module, SIM) card interface 195, and the like. The sensor module 180 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, and the like.

It may be understood that the structure shown in this embodiment does not constitute a specific limitation on the terminal device. In some other embodiments of this application, the terminal device may include more or fewer components than those shown in the figure, some components may be combined, some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that just has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB port 130 is an interface that conforms to a USB standard specification, and may be specifically a mini USB interface, a micro USB interface, a USB Type C interface, or the like. The USB port 130 may be configured to connect to a charger to charge the terminal device, may be configured to transmit data between the terminal device and a peripheral device, or may be configured to connect to a headset, to play audio by using the headset. The interface may be further configured to connect to another terminal device, for example, an AR device.

It may be understood that an interface connection relationship between the modules that is shown in this embodiment of the present invention is merely an example for description, and does not constitute a limitation on the structure of the terminal device. In some other embodiments of this application, alternatively, the terminal device may use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from the wired charger through the USB port 130. In some embodiments of wireless charging, the charging management module 140 may receive a wireless charging input through a wireless charging coil of the terminal device. The charging management module 140 may further supply power to the terminal device by using the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor a parameter such as a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal device may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device may be configured to cover one or more communication frequency bands. Different antennas may be further reused, to improve antenna utilization. For example, the antenna 1 may be reused as a diversity antenna in a wireless local area network. In some other embodiments, the antenna may be used in combination with a tuning switch.

The mobile communication module 150 may provide a solution, applied to the terminal device, to wireless communication including 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium- and high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, and the like), or displays an image or a video on the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution, applied to the terminal device, to wireless communication including a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the terminal device are coupled, and the antenna 2 and the wireless communication module 160 in the terminal device are coupled, so that the terminal device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division synchronous code division multiple access (time-division synchronous code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beiDou navigation satellite system, BDS), a quasi-zenith satellite system (quasi-zenith satellite system, QZSS), and/or a satellite based augmentation system (satellite based augmentation system, SBAS).

The terminal device may implement a display function through the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal device may include one display 194 or N1 displays 194, where N1 is a positive integer greater than 1.

The terminal device may implement a photographing function by using the ISP, the camera 193, the video codec, the GPU, the display 194, the application processor, and the like.

The touch sensor is also referred to as a "touch panel". The touch sensor may be disposed in the display 194, and the touch sensor and the display 194 form a touchscreen. The touch sensor is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor may also be disposed on a surface of the terminal device and at a location different from a location of the display 194. The terminal device may implement a pattern drawing function by using the touch sensor, the GPU, the display 194, and the application processor.

The external memory interface 120 may be configured to connect to an external storage card, for example, a micro SD card, to extend a storage capability of the terminal device. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application (for example, a camera application) required by at least one function, or the like. The data storage area may store data (for example, an image captured by a camera) and the like that are created during use of the terminal device. In addition, the internal memory 121 may include a high-speed random access memory, and may further include a nonvolatile memory, for example, at least one magnetic disk storage device, a flash memory, or a universal flash storage (universal flash storage, UFS). The processor 110 runs the instructions stored in the internal memory 121 and/or the instructions stored in a memory disposed in the processor, to perform various function applications and data processing of the terminal device.

The terminal device may implement an audio function, for example, music playing and recording, through the audio module 170, the speaker 170A, the receiver 170B, the microphone 170C, the headset jack 170D, the application processor, and the like.

The key 190 includes a power key, a volume key, and the like. The key 190 may be a mechanical key, or may be a touch key. The terminal device may receive a key input, and generate a key signal input related to user settings and function control of the terminal device.

The motor 191 may generate a vibration prompt. The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the terminal device. The terminal device may support one SIM card interface or N3 SIM card interfaces, where N3 is a positive integer greater than 1.

The following describes in detail the technical solutions provided in this application with reference to specific embodiments.

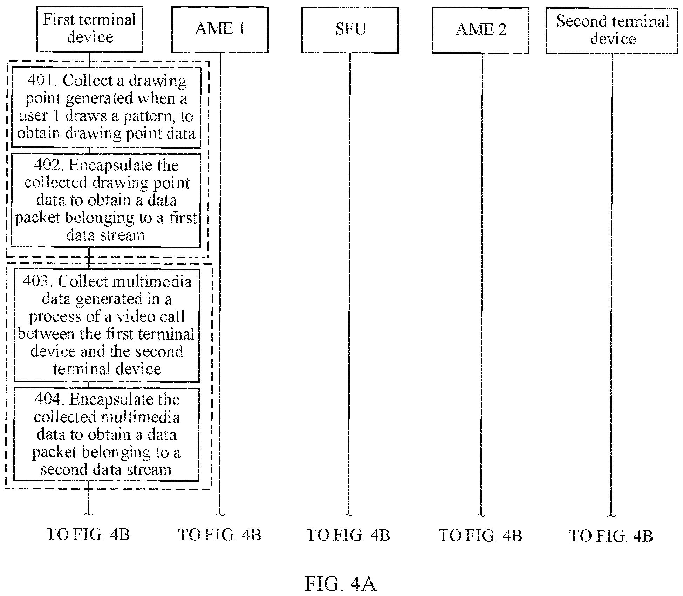

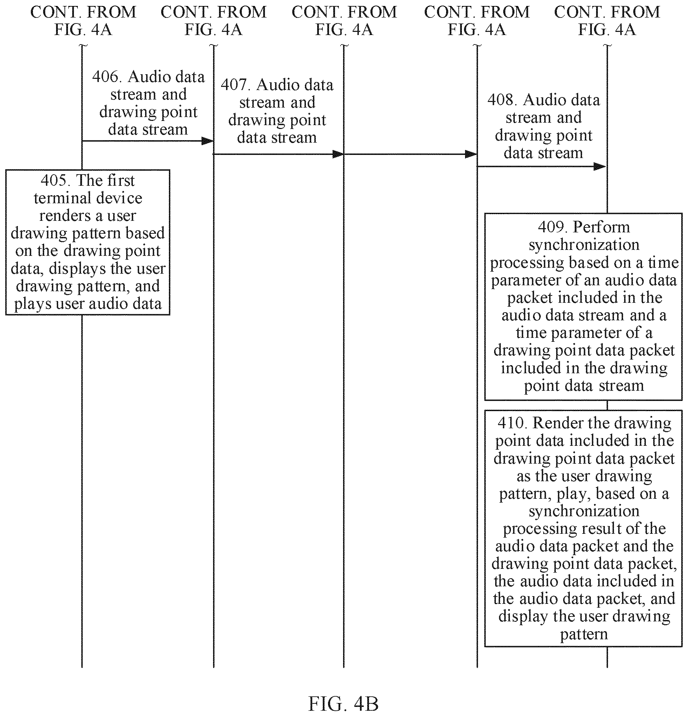

For example, two terminal devices make a video call. The two terminal devices are a first terminal device and a second terminal device respectively. In a video call process between the first terminal device and the second terminal device, a user of the first terminal device draws a pattern to display content to be described. In embodiments of this application, a layer for pattern drawing is overlaid (overlay) on a video call user interface, and the layer may be referred to as a drawing layer. Certainly, another name may also be used. A drawing layer view may be transparent, may be a whiteboard, or may use another color. This is not specifically limited in embodiments of this application. Refer to FIG. 4A and FIG. 4B. FIG. 4A and FIG. 4B are a schematic flowchart of a video call according to an embodiment of this application. For ease of description, a user of a first terminal device is referred to as a user 1, and a user of a second terminal device is referred to as a user 2 below.

401. The first terminal device collects a drawing point generated when the user 1 draws a pattern, to obtain drawing point data.

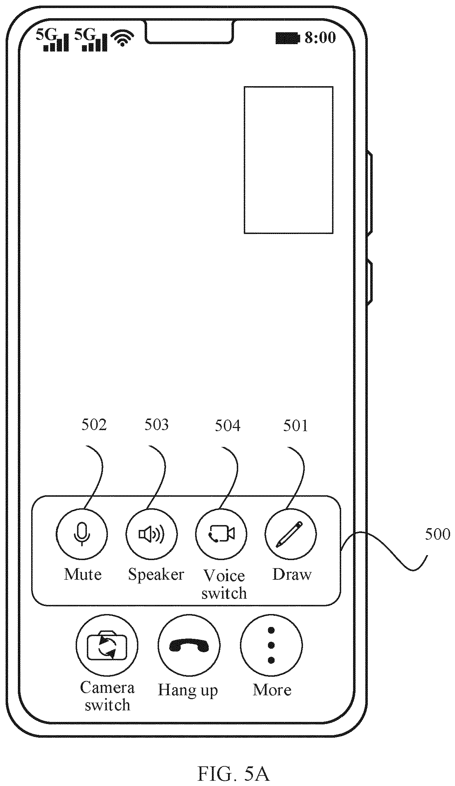

In an example, refer to FIG. 5A. FIG. 5A is a schematic diagram of a possible call user interface of the first terminal device in a call process between the first terminal device and the second terminal device. The call user interface includes a control bar 500. The control bar 500 includes a drawing control 501. The call user interface may further include other controls, for example, a mute control 502, a speaker 503, and a voice switch control 504. A control included in the control bar 500 on the call user interface is merely used as an example. In addition, a location of the drawing control 501 on the call user interface is not limited in this embodiment of this application.

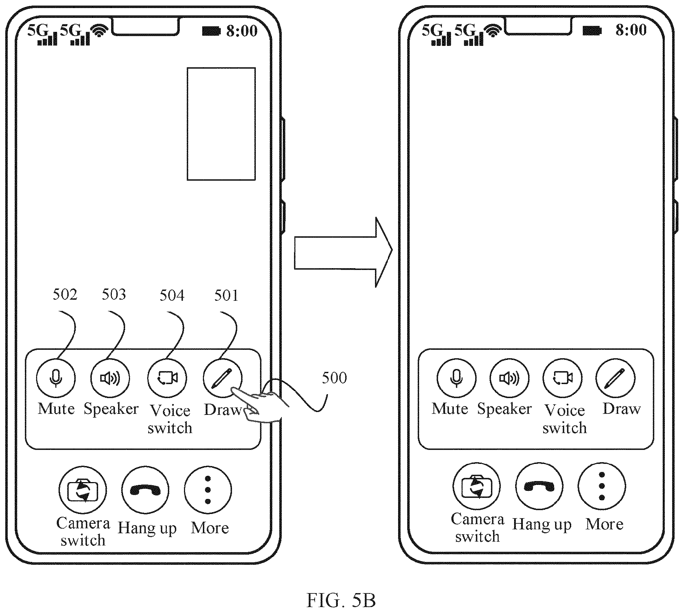

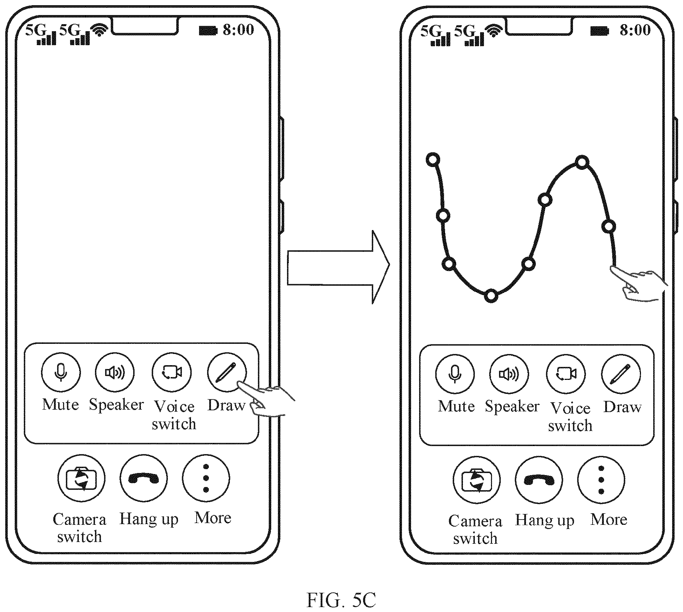

In response to an operation of touching the drawing control 501 by the user 1 of the first terminal device, the first terminal device overlays a drawing layer on a current display user interface, as shown in FIG. 5B. In FIG. 5B, an example in which the drawing layer is a whiteboard is used. An image picture captured by a camera in a video call is covered after the drawing layer is overlaid. In FIG. 5B, only an example in which the drawing layer is a non-transparent whiteboard is used, and this does not constitute a specific limitation. Further, the user 1 may draw a pattern on the drawing layer. The first terminal device collects, in response to an operation of drawing the pattern by the user 1 on a display of the first terminal device, a drawing point generated by the user 1 by drawing the pattern. The first terminal device may collect, in real time at a preset collection rate, coordinates of a touch point of a hand of the user 1 on the display to obtain drawing point data, where the drawing point data may also be referred to as action data. Specifically, the first terminal device continuously collects drawing points to obtain a collection sequence, and obtains the drawing point data based on an order in the collection sequence. The collection rate is, for example, collecting 30 drawing points per second. In an example, FIG. 5C is a schematic diagram of a display user interface including a drawn pattern. A ring in FIG. 5C is merely used as an example of a drawing point. In actual display, a black line is displayed, and a collected drawing point is not displayed. A manner of obtaining the drawing pattern is described in detail subsequently. Details are not described herein.

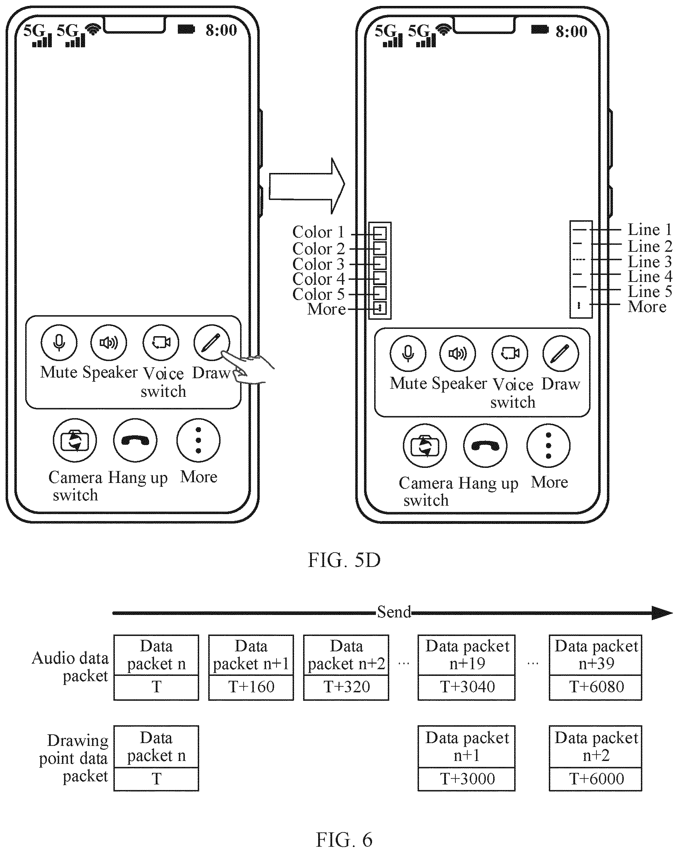

Notably, the user 1 of the first terminal device may determine, according to a requirement, a color of the drawn pattern, a style of a line, a thickness of the line, and the like. After the drawing layer is overlaid on the call user interface, a drawing tool control can further be overlaid. In an example, the drawing tool control is displayed in response to the operation of touching the drawing control 501 by the user 1, for example, as shown in FIG. 5D. The drawing tool control includes an optional color of the drawn pattern and an optional style of the line. The user 1 may select a line color and a line style of the drawn pattern according to a requirement. For example, in addition to the coordinates of the drawing point, the drawing point data may further include content such as a line color and the line style that are selected by the user 1. In an example, the user 1 does not select a line color, a line style, or the like of the drawn pattern, and the drawing point data generated by the first terminal device may include content such as a default line color and a default line style.

402. The first terminal device encapsulates the collected drawing point data to obtain a data packet belonging to a first data stream. In this embodiment of this application, for ease of description, the data packet obtained by encapsulating the drawing point data is referred to as a drawing point data packet. Certainly, another name may also be used. This is not specifically limited in this application. In the following descriptions, the drawing point data packet is used as an example. In an example, one drawing point data packet includes one piece of drawing point data. The first terminal device obtains drawing point data packets through continuous encapsulation according to an order of collected drawing point sequences, to obtain a first data stream. The first data stream may also be referred to as a drawing point data stream. The drawing point data stream includes a plurality of consecutive drawing point data packets. It may be understood that the drawing point data is collected in real time and is encapsulated into a drawing point data packet in real time. Each time one piece of drawing point data is collected, the drawing point data is encapsulated into a drawing point data packet, and the drawing point data packet is sent.

For example, the drawing point data packet may use the real-time transport protocol (real-time transport protocol, RTP) or the real-time transport control protocol (real-time transport control protocol, RTCP).

403. The first terminal device collects multimedia data generated in a process of the video call between the first terminal device and the second terminal device. The multimedia data may be user audio data or user video data.

A time sequence of step 401 and step 403 is not limited in this embodiment of this application. For example, the drawing point data is collected when the multimedia data is collected.

404. The first terminal device encapsulates the collected multimedia data to obtain a data packet belonging to a second data stream. When the multimedia data includes the audio data, the data packet of the second data stream may also be referred to as an audio data packet. When the multimedia data includes the video data, the data packet of the second data stream may also be referred to as a video data packet. A data stream formed by the multimedia data may be referred to as a multimedia data stream. When the first terminal device sends the multimedia data and the drawing point data to the second terminal device, the multimedia data and the drawing point data are not combined for sending, but are separately sent. Therefore, to ensure that the drawn pattern displayed at a receiving end is synchronous with heard audio or a viewed video, synchronization processing needs to be performed on the drawing point data and the multimedia data. In addition, Notably, the video data and the audio data are also sent separately.

In FIG. 4A and FIG. 4B, an example in which the multimedia data is the audio data is used. Specifically, the first terminal device obtains audio data packets through encapsulation according to an order of collected audio sequences, to obtain an audio data stream.

Notably, in the process of the call between the first terminal device and the second terminal device, the video data may be generated while the audio data is generated. Certainly, alternatively, the video data may be generated when no audio data is generated, or the audio data is generated when no video data is generated. Synchronization between the video data and the audio data may be performed in a conventional synchronization manner, and is not described in this application. To ensure synchronization of the drawn pattern displayed at the receiving end, the played audio, and the displayed video, in one manner, synchronization processing is performed on the drawing point data and the audio data; and in another manner, synchronization processing is performed on the drawing point data and the video data.

The following uses an example in which synchronization processing is performed on the drawing point data and the audio data. For example, both the audio data packet and the drawing point data packet use the RTP. During the synchronization processing, a timestamp or a sequence number may be used for controlling synchronization between the drawing point data and the audio data.

For example, if an audio sampling frequency is 8K, an encapsulation period of the audio data packet is 0.02s, and one audio data packet is obtained through encapsulation every 0.02s. For ease of distinguishing, a timestamp increment of the drawing point data packet is referred to as a first timestamp increment, and a timestamp increment of the audio data packet is referred to as a second timestamp increment. A second timestamp increment between two adjacent audio data packets is 160=0.02*8*1000. The drawing point data also belongs to the video data, and a timestamp increment of the drawing point data is determined in a manner of determining a timestamp increment of the video data. For example, a video sampling frequency is 90K, and an encapsulation period of the drawing point data packet is (1/30)s. To be specific, one drawing point data packet is encapsulated every (1/30)s, and 30 first data packets are encapsulated per second. A first timestamp increment between two adjacent drawing point data packets is 3000=(1/30)*90*1000. In this embodiment of this application, a period of collecting the drawing point data is referred to as a collection period. The collection period of collecting the drawing point data is the same as the encapsulation period. One drawing point may be collected every (1/30)s, that is, 30 drawing points are collected per second.

The audio data packet and the drawing point data packet are sent based on the second timestamp increment of the audio data packet and the first timestamp increment of the drawing point data packet. For example, it is determined, based on timestamp synchronization, that a drawing point data packet and an audio data packet whose timestamps are the same or different within a specified range are synchronized. Refer to FIG. 6. One drawing point data packet is sent every time 19 audio data packets are sent. In FIG. 6, n, n+1, n+2, ..., n+19, ..., n+38, and the like indicate sequence numbers of data packets, and T, T+160, T+320, T+3040, T+3000, T+6000 and T+6080 indicate timestamps of the data packets. With reference to FIG. 6, an audio data packet with a sequence number n is synchronously corresponding to a drawing point data packet with a sequence number n, and an audio data packet with a sequence number n+19 is synchronously corresponding to a drawing point data packet with a sequence number n+1, that is, every 19 audio data packets are corresponding to one drawing point data packet. In other words, it may be determined that a sequence number increment between audio data packets is 19 when a drawing point data packet is synchronized with an audio data packet. From a perspective of sequence numbers, sequence numbers of an audio data packet and a drawing point data packet that are synchronized may satisfy a relationship in the following formula 1.

$$Nx=K*(N-N1)+N2 \quad \text{Formula 1}$$

Nx represents a sequence number of the audio data packet, N represents a sequence number of the drawing point data packet, K represents a sequence number increment, and N1 and N2 represent sequence numbers of a 1st drawing point data packet and a 1st audio data packet that are synchronized. In FIG. 6, sequence numbers of a drawing point data packet and an audio data packet that are synchronized are both n, that is, N1=N2=n.

From a perspective of timestamps, an audio data packet with a timestamp T+3040 corresponds to a drawing point data packet with a timestamp T+3000, and an audio data packet with a timestamp T+6080 corresponds to a drawing point data packet with a timestamp T+600. In this case, it may be determined that a synchronization timestamp increment of the audio data packet is 3040, and a synchronization timestamp increment of the drawing point data packet is 3000. For ease of distinguishing, the synchronization timestamp increment of the audio data packet is referred to as a second synchronization timestamp increment, and the synchronization timestamp increment of the drawing point data packet is referred to as a first synchronization timestamp increment.

Based on this, to enable the receiving end to synchronize the drawing point data and the audio data, the first terminal device may include, in the drawing point data packet and the audio data packet, information for synchronizing the drawing point data and the audio data, and send the information to a device responsible for synchronizing the drawing point data and the audio data. The information for synchronizing the drawing point data and the audio data may include a first timestamp increment and a second timestamp increment, may include the video sampling frequency and the encapsulation period of the drawing point data packet that are for determining the first timestamp increment, and the audio sampling frequency and the encapsulation period of the audio data packet that are for determining the second timestamp increment, may include the sequence number increment, or may include the first synchronization timestamp increment and the second synchronization timestamp increment.

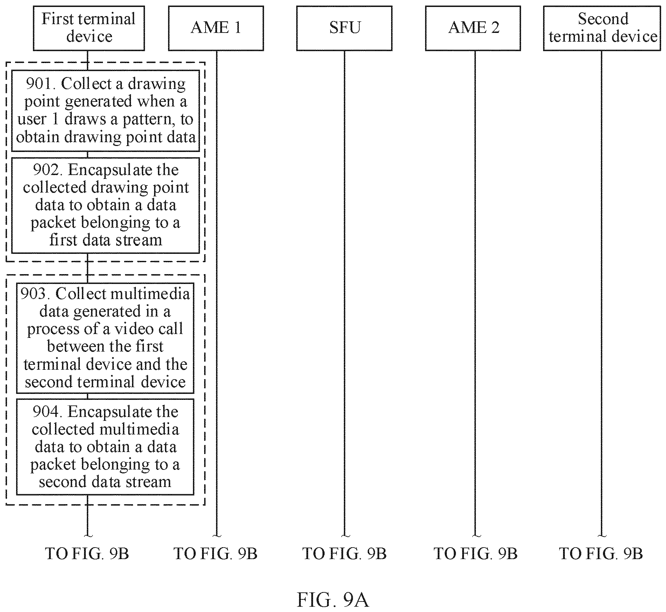

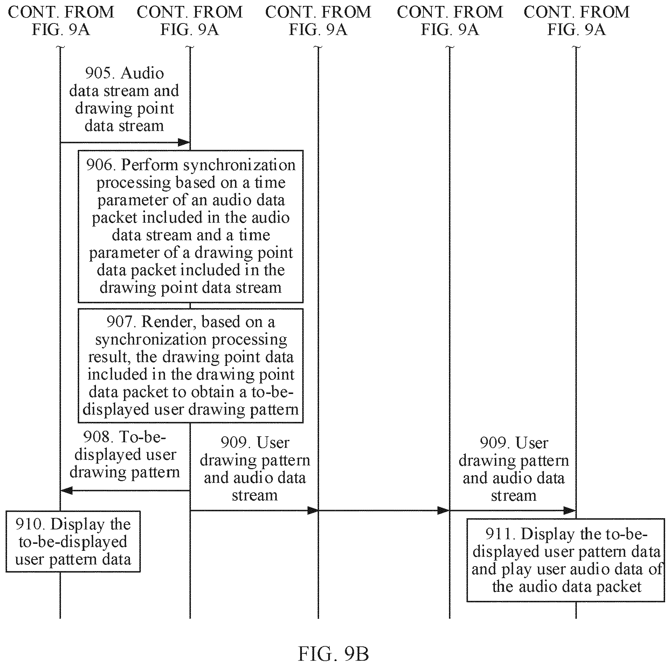

In this embodiment of this application, the device responsible for synchronizing the drawing point data and the audio data may be an AME, for example, an AME to which the first terminal device belongs. The device responsible for synchronizing the drawing point data and the audio data may alternatively be a peer terminal device, which is the second terminal device in this embodiment. In FIG. 4A and FIG. 4B, an example in which the device responsible for synchronizing the drawing point data and the audio data is a peer terminal device is used. With reference to FIG. 9A and FIG. 9B, the solution provided in this embodiment of this application is described in detail subsequently by using an AME as an example of the device responsible for synchronizing the drawing point data and the audio data. Details are not described herein.

In some embodiments, when the device responsible for synchronizing the drawing point data and the audio data is the second terminal device, when the first terminal device sends the first timestamp increment and the second timestamp increment to the second terminal device, the first terminal device may include the first timestamp increment in the drawing point data packet, include the second timestamp increment in the audio data packet, and send the drawing point data packet and the audio data packet to the device responsible for synchronizing the drawing point data and the audio data. For example, to reduce sending resources occupied by the first timestamp increment and the second timestamp increment, the first terminal device may send the first timestamp increment once at an interval of sending a first quantity of drawing point data packets, and send the second timestamp increment once at an interval of sending a second quantity of audio data packets. Alternatively, the first terminal device may include the first timestamp increment in only the first K1 sent drawing point data packets, and include the second timestamp increment in only the first K2 sent audio data packets.

In some other embodiments, when the device responsible for synchronizing the drawing point data and the audio data is the second terminal device, the first terminal device sends, to the second terminal device in the following manner, the video sampling frequency and the encapsulation period of the drawing point data packet that are for determining the first timestamp increment, and the audio sampling frequency and the encapsulation period of the audio data packet that are for determining the second timestamp increment:

The first terminal device may include the video sampling frequency and the encapsulation period of the drawing point data packet in the drawing point data packet, include the audio sampling frequency and the encapsulation period of the audio data packet in the audio data packet, and send the drawing point data packet and the audio data packet to the device responsible for synchronizing the drawing point data and the audio data. For example, to reduce occupied sending resources, the first terminal device may send the video sampling frequency and the encapsulation period of the drawing point data packets once at an interval of sending a first quantity of drawing point data packets, and send the audio sampling frequency and the encapsulation period of the audio data packets once at an interval of sending a second quantity of drawing point data packets. Alternatively, the first terminal device may include the video sampling frequency and the encapsulation period of the drawing point data packet in only the first K1 sent drawing point data packets, and include the audio sampling frequency and the encapsulation period of the audio data packet in only the first K2 sent audio data packets.

In still some other embodiments, when the device responsible for synchronizing the drawing point data and the audio data is the second terminal device, when the first terminal device sends the sequence number increment to the second terminal device, the first terminal device may include the sequence number increment in the audio data packet and send the audio data packet to the device responsible for synchronizing the drawing point data and the audio data. For example, to reduce sending resources occupied by the sequence number increment, the first terminal device may send the sequence number increment once at an interval of sending a second quantity of audio data packets. Alternatively, the first terminal device may include the sequence number increment in only the first K2 sent audio data packets.

In yet some other embodiments, when the device responsible for synchronizing the drawing point data and the audio data is the second terminal device, when the first terminal device sends the first synchronization timestamp increment and the second synchronization timestamp increment to the second terminal device, the first terminal device may include the first synchronization timestamp increment in the drawing point data packet, include the second synchronization timestamp increment in the audio data packet, and send the drawing point data packet and the audio data packet to the device responsible for synchronizing the drawing point data and the audio data. For example, to reduce sending resources occupied by the first synchronization timestamp increment and the second synchronization timestamp increment, the first terminal device may send the first synchronization timestamp increment once at an interval of sending a first quantity of drawing point data packets, and send the second synchronization timestamp increment once at an interval of sending a second quantity of audio data packets. Alternatively, the first terminal device may include the first synchronization timestamp increment in only the first K1 sent drawing point data packets, and include the second synchronization timestamp increment in only the first K2 sent audio data packets.

405. The first terminal device renders the user drawing pattern based on the drawing point data, and displays the user drawing pattern, for example, as shown in FIG. 5C; and the first terminal device plays the user audio data.

406. The first terminal device sends the audio data stream and the drawing point data stream to an AME 1 by using an SBC 1.

407. The AME 1 sends the audio data stream and the drawing point data stream to an AME 2 by using an SFU.

408. The AME 2 sends the audio data stream and the drawing point data stream to the second terminal device by using an SBC 2.

409. The second terminal device receives the audio data stream and the drawing point data stream from the AME 2, and the second terminal device performs synchronization processing based on a time parameter of the audio data packet included in the audio data stream and a time parameter of the drawing point data packet included in the drawing point data stream. The time parameter may include a timestamp and/or a sequence number.

In a possible implementation, after the first terminal device establishes the video call with the second terminal device, a time point of generating the first drawing point may be used as start points of the timestamp increments of the audio data packet and the drawing point data packet until drawing is completed.

In some embodiments, the drawing point data packet carries the first timestamp increment, and the audio data packet carries the second timestamp increment.

The second terminal device performs synchronization processing based on the timestamp of the audio data packet included in the audio data stream, the timestamp of the drawing point data packet included in the drawing point data stream, the first timestamp increment, and the second timestamp increment. For example, the second terminal device may determine the second synchronization timestamp increment of the audio data packet and the first synchronization timestamp increment of the drawing point data packet based on the first timestamp increment and the second timestamp increment, and then synchronize, based on the first synchronization timestamp increment and the second synchronization timestamp increment, the audio data packet included in the audio data stream with the drawing point data packet included in the drawing point data stream. For example, if the first timestamp increment is 160, and the second timestamp increment is 3000, the first synchronization timestamp increment may be 3000, and the second synchronization timestamp increment may be round

$$\left(\frac{3000}{160}\right) * 160,$$

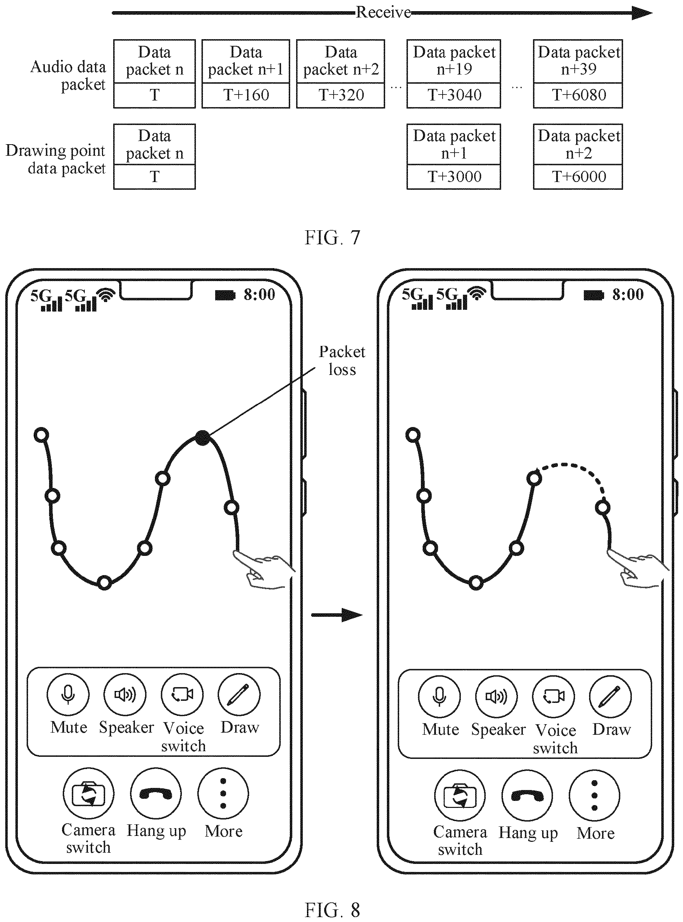

, where Round indicates rounding off. That is, a timestamp interval between any two audio data packets synchronized with the drawing point data packet is 3040, and a timestamp interval between any two drawing point data packets synchronized with the audio data packet is 3000. For example, as shown in FIG. 7, a $1^{st}$ audio data packet is synchronized with a $1^{st}$ drawing point data packet. For example, if timestamps of the $1^{st}$ audio data packet and the $1^{st}$ drawing point data packet are both T, a $2^{nd}$ audio data packet and a $2^{nd}$ drawing point data packet that are synchronized are an audio data packet with a timestamp of T+3040 and a drawing point data packet with a timestamp of T+3000, and a $3^{rd}$ audio data packet and a $3^{rd}$ drawing point data packet that are synchronized are an audio data packet with a timestamp of T+6080 and a drawing point data packet with a timestamp of T+6000. The rest may be deduced by analogy.

In some other embodiments, the drawing point data packet carries the first synchronization timestamp increment, and the audio data packet carries the second synchronization timestamp increment. Further, the second terminal device synchronizes, based on the first synchronization timestamp increment and the second synchronization timestamp increment, the audio data packet included in the audio data stream with the drawing point data packet included in the drawing point data stream.

In still some other embodiments, the audio data packet carries the sequence number increment. The second terminal device performs synchronization processing based on the sequence number of the audio data packet included in the audio data stream, the sequence number of the drawing point data packet included in the drawing point data stream, and the sequence number increment. An audio data packet of a corresponding sequence number at an interval of the sequence number increment is synchronized with a drawing point data packet whose sequence number is incremented by 1. For example, a first audio data packet is synchronized with a first drawing point data packet, a second audio data packet is synchronized with a second drawing point data packet, a sequence number interval between the first audio data packet and the second audio data packet is the sequence number increment, and a sequence number interval between the first drawing point data packet and the second drawing point data packet is 1. For example, if the sequence number increment is K, a correspondence between a sequence number of an audio data packet and a sequence number of a drawing point data packet synchronized with the audio data packet is (K*(N-N1)+N2, N). For example, if a sequence number of a drawing point data packet is N, a sequence number of an audio data packet synchronized with the drawing point data packet is K*(N-N1)+N2. N1 and N2 are sequence numbers of a $1^{st}$ drawing point data packet and a $1^{st}$ audio data packet that are synchronized. In an example, a sequence number of the $1^{st}$ drawing point data packet may be the same as a sequence number of an audio data packet synchronized with the drawing point data packet, that is, N1=N2. For example, refer to FIG. 7. Sequence numbers of a $1^{st}$ drawing point data packet and a $1^{st}$ audio data packet are both n, and the sequence number increment is 19. In this case, the audio data packet with the sequence number n is synchronously corresponding to the drawing point data packet with the sequence number n, an audio data packet with a sequence number n+19 is synchronously corresponding to a drawing point data packet with a sequence number n+1, and the rest may be deduced by analogy. That is, every 19 audio data packets are corresponding to one drawing point data packet.

In yet some other embodiments, the audio data packet carries the audio sampling frequency and the encapsulation period of the audio data packet, and the drawing point data packet carries the video sampling frequency and the encapsulation period of the drawing point data packet. In an example, the second terminal device determines the second timestamp increment of the audio data packet based on the audio sampling frequency and the encapsulation period of the audio data packet, determines the first timestamp increment of the drawing point data packet based on the video sampling frequency and the encapsulation period of the drawing point data packet, and performs synchronization processing on the audio data packet and the drawing point data packet based on the first timestamp increment and the second timestamp increment. In another example, the second terminal device determines the second timestamp increment of the audio data packet based on the audio sampling frequency and the encapsulation period of the audio data packet, and determines the first timestamp increment of the drawing point data packet based on the video sampling frequency and the encapsulation period of the drawing point data packet. Further, the second terminal device determines the sequence number increment of the audio data packet based on the first timestamp increment and the second timestamp increment, and performs synchronization processing on the audio data packet and the drawing point data packet based on the sequence number increment.

410. The second terminal device renders the drawing point data included in the drawing point data packet as the user drawing pattern, plays, based on a synchronization processing result of the audio data packet and the drawing point data packet, the audio data included in the audio data packet, and displays the user drawing pattern.

In a possible implementation, the user 1 of the first terminal device draws a pattern on a whiteboard. In this scenario, the first terminal device may not send a video image corresponding to the whiteboard to another terminal device. In this way, the second terminal device receives only the drawing point data packet and the audio data packet, and the second terminal device performs 401.

In another possible implementation, the first terminal device may mark a video image, for example, in a scenario such as remote guidance, advertising, or remote education. In this scenario, based on collecting the drawing point data, the first terminal device further collects the user video data and the user audio data in step 403. The first terminal device sends the video data stream, the audio data stream, and the drawing point data stream to another terminal device. Further, the second terminal device receives the audio data stream, the video data stream, and the drawing point data stream. The second terminal device synchronizes the audio data stream, the video data stream, and the drawing point data stream to obtain the synchronization processing result. Notably, when synchronization is performed, the audio data stream and the drawing point data stream may be synchronized in the synchronization manner provided in this embodiment of this application, and the audio data stream and the video data stream may be synchronized in an existing synchronization manner. Alternatively, the video data stream and the drawing point data stream may be synchronized in the synchronization manner provided in this embodiment of this application, and the video data stream and the audio data stream may be synchronized in an existing synchronization manner. After obtaining the synchronization processing result, the second terminal device renders the user video data of the video data stream based on the synchronization processing result to obtain a user video image, renders the drawing point data of the drawing point data stream based on the synchronization processing result to obtain the user drawing pattern, and overlays the rendered user video image and the rendered user drawing pattern (or overlays the user drawing pattern on the user video image). For example, if a video data packet 1 in the video data stream is synchronized with a drawing point data packet 1 in the drawing point data stream, a user video image obtained by rendering user video data included in the video data packet 1 and a user drawing pattern obtained by rendering drawing point data included in the drawing point data packet 1 are overlaid to obtain a to-be-displayed image. Then, the to-be-displayed image is displayed and the audio data included in the audio data stream is played based on the synchronization processing result.

In a possible implementation, in a process in which the first terminal device sends the audio data stream and the drawing point data stream to the second terminal device, jitter may occur during network transmission, and consequently, one or more data packets in the drawing point data stream are lost. Further, a loss of a drawing point data packet causes a deviation of a user drawing pattern obtained through rendering based on a received drawing point data packet. For example, as shown in FIG. 8, a user drawing pattern displayed by the first terminal device is obviously different from a user drawing pattern displayed by the second terminal device. In FIG. 8, a black dot represents a drawing point corresponding to a lost drawing point data packet. A black ring represents a drawing point corresponding to drawing point data actually collected by the first terminal device. To prevent an obvious deviation of a user drawing pattern caused by a loss of a drawing point data packet, in this embodiment of this application, the lost drawing point data is predicted in a data prediction manner, so that the predicted drawing point data is used for replacing the lost drawing point data packet during pattern drawing.

In an example, when receiving the drawing point data packet belonging to the drawing point data stream, the second terminal device stores the drawing point data packet in a receive buffer. Further, when rendering the drawing point data packet as the user drawing pattern, the second terminal device obtains a first drawing point data packet of the drawing point data stream from the receive buffer, performs a rendering operation on drawing point data in the first drawing point data packet. When a second drawing point data packet belonging to the drawing point data stream is not obtained from the receive buffer at a rate at which the second terminal device renders a drawing point of the user drawing pattern, the second terminal device predicts the second drawing point data packet based on the first N drawing point data packets on which rendering has been performed. The second drawing point data packet is a next drawing point data packet adjacent to the first drawing point data packet in the drawing point data stream. Alternatively, it may be described as follows: A sequence number of the second drawing point data packet is adjacent to a sequence number of the first drawing point data packet, and the sequence number of the second drawing point data packet is greater than the sequence number of the first drawing point data packet. Alternatively, it may be described as follows: A timestamp of the second drawing point data packet is greater than a timestamp of the first drawing point data packet, and the timestamp of the second drawing point data packet and the timestamp of the first drawing point data packet are separated by the first timestamp increment. Still further, the second terminal device renders second drawing point data based on the predicted second drawing point data packet.

It can be understood that in this embodiment of this application, when the drawing point data is rendered, to-be-displayed pattern data is generated, and the to-be-displayed pattern data is for describing a connection line between two drawing points. For example, rendering the second drawing point data is used as an example. The second terminal device renders the second drawing point data, to generate pattern data for representing a connection line between a first drawing point described by the first drawing point data and a second drawing point described by the second drawing point data. Then, the generated pattern data is displayed.

Specifically, the user drawing pattern may be obtained through rendering based on content such as the line color, the line style, and the line thickness that are included in the drawing point data.

In another example, after rendering the second drawing point data based on the predicted second drawing point data packet, when receiving the second drawing point data packet from the first terminal device, the second terminal device may replace, with second pattern data generated by rendering the second drawing point data included in the received second drawing point data packet, first pattern data generated by rendering the predicted second drawing point data. Further, the second pattern data is displayed.

The foregoing embodiment corresponding to FIG. 4A and FIG. 4B is described from a perspective that a terminal device of a receiving end is responsible for synchronization processing and rendering operations of the point data stream and the audio data stream. In this embodiment of this application, alternatively, the AME deployed on a cloud side may be responsible for synchronization processing of the drawing point data stream and the audio data stream and a rendering operation of the drawing point data. With reference to FIG. 9A and FIG. 9B, the following describes in detail a procedure in which the AME performs synchronization processing on the drawing point data stream and the audio data stream and rendering on the drawing point data. In this embodiment, an IMS architecture is used as an example, and the IMS architecture-based communication system shown in FIG. 1 is used as an example.

Refer to FIG. 9A and FIG. 9B. FIG. 9A and FIG. 9B are a schematic flowchart of a video call method according to an embodiment of this application. For example, two terminal devices make a video call in FIG. 9A and FIG. 9B. The two terminal devices are a first terminal device and a second terminal device respectively. In a video call process between the first terminal device and the second terminal device, a user of the first terminal device draws a pattern to display content to be described.

For steps 901 to 904, refer to steps 401 to 404. Details are not described herein again.

905. The first terminal device sends an audio data stream and a drawing point data stream to an AME 1 by using an SBC 1.

In FIG. 9A and FIG. 9B, an example in which a device responsible for synchronizing drawing point data and audio data is an AME is used. The AME responsible for synchronizing the drawing point data and the audio data may be an AME to which a terminal device of a transmitting end belongs, that is, the AME 1. The AME 1 renders the drawing point data to obtain to-be-displayed pattern data, combines the to-be-displayed pattern data and to-be-played data that is obtained by rendering the audio data, and sends combined data to an AME 2.

To enable the AME 1 to synchronize the drawing point data and the audio data, in a first possible manner, the first terminal device may include information for synchronizing the drawing point data and the audio data in a drawing point data packet and an audio data packet, and send the drawing point data packet and the audio data packet to the AME 1. In a second possible manner, the first terminal device may send, to an application server, information for synchronizing the drawing point data and the audio data, and the application server sends, to the AME 1, the information for synchronizing the drawing point data and the audio data.

The information for synchronizing the drawing point data and the audio data may include a first timestamp increment and a second timestamp increment, may include a video sampling frequency and an encapsulation period of the drawing point data packet that are for determining the first timestamp increment, and an audio sampling frequency and an encapsulation period of the audio data packet that are for determining the second timestamp increment, may include a sequence number increment, or may include a first synchronization timestamp increment and a second synchronization timestamp increment.

When the first possible manner is used, in some embodiments, the first terminal device may include the first timestamp increment in the drawing point data packet, include the second timestamp increment in the audio data packet, and send the drawing point data packet and the audio data packet to the AME 1. For example, to reduce sending resources occupied by a first timestamp and a second timestamp, the first terminal device may send the first timestamp increment once at an interval of sending a first quantity of drawing point data packets, and send the second timestamp increment once at an interval of sending a second quantity of audio data packets. Alternatively, the first terminal device may include the first timestamp increment in only the first K1 sent drawing point data packets, and include the second timestamp increment in only the first K2 sent audio data packets.

In some other embodiments, the first terminal device may include the video sampling frequency and the encapsulation period of the drawing point data packet in the drawing point data packet, include the audio sampling frequency and the encapsulation period of the audio data packet in the audio data packet, and send the drawing point data packet and the audio data packet to the AME 1.

In still some other embodiments, the first terminal device may include the sequence number increment in the audio data packet, and send the audio data packet to the AME 1.

In yet some other embodiments, the first terminal device may include the first synchronization timestamp increment in the drawing point data packet, include the second synchronization timestamp increment in the audio data packet, and send the drawing point data packet and the audio data packet to the AME 1.

When the first possible manner is used, for specific content of a manner of including the information for synchronizing the drawing point data and the audio data in the drawing point data packet and the audio data packet, refer to related descriptions in the embodiment corresponding to FIG. 4A and FIG. 4B. Details are not described herein again.

When the second possible manner is used, in some embodiments, the first terminal device may send the first timestamp increment and the second timestamp increment to the application server, so that the application server sends the first timestamp increment and the second timestamp increment to the AME 1. For example, the first terminal device may send the first timestamp increment and the second timestamp increment to the application server in a process of establishing a call connection to the second terminal device, so that the application server sends the first timestamp increment and the second timestamp increment to the AME 1. For another example, alternatively, the first terminal device may send the first timestamp increment and the second timestamp increment to the application server in a process of completing establishment of a call connection to the second terminal device, so that the application server sends the first timestamp increment and the second timestamp increment to the AME 1.

In some other embodiments, the first terminal device may send the video sampling frequency, the encapsulation period of the drawing point data packet, the audio sampling frequency, and the encapsulation period of the audio data packet to the application server, and then the application server sends the video sampling frequency, the encapsulation period of the drawing point data packet, the audio sampling frequency, and the encapsulation period of the audio data packet to the AME 1.

In still some other embodiments, the first terminal device may send the sequence number increment to the application server, and then the application server sends the sequence number increment to the AME 1.

In yet some other embodiments, the first terminal device may send the first synchronization timestamp increment and the second synchronization timestamp increment to the application server, and then the application server sends the first synchronization timestamp increment and the second synchronization timestamp increment to the AME 1.

906. The AME 1 performs synchronization processing based on a time parameter of the audio data packet included in the audio data stream and a time parameter of the drawing point data packet included in the drawing point data stream. The time parameter may include a timestamp and/or a sequence number.

In some embodiments, the AME 1 performs synchronization processing based on the timestamp of the audio data packet included in the audio data stream, the timestamp of the drawing point data packet included in the drawing point data stream, the first timestamp increment, and the second timestamp increment. For a manner of obtaining the first timestamp increment and the second timestamp increment, refer to related descriptions of step 905. Details are not described herein again. For example, the first timestamp increment is carried in the drawing point data packet, and the second timestamp increment is carried in the audio data packet. For another example, the AME 1 receives the first timestamp increment and the second timestamp increment that are sent by the first terminal device by using the application server.

For example, the AME 1 may determine the second synchronization timestamp increment of the audio data packet and the first synchronization timestamp increment of the drawing point data packet based on the first timestamp increment and the second timestamp increment, and then synchronize, based on the first synchronization timestamp increment and the second synchronization timestamp increment, the audio data packet included in the audio data stream with the drawing point data packet included in the drawing point data stream. A manner in which the AME 1 synchronizes, based on the first synchronization timestamp increment and the second synchronization timestamp increment, the audio data packet included in the audio data stream with the drawing point data packet included in the drawing point data stream is similar to the manner in which the second terminal device performs synchronization based on the first synchronization timestamp increment and the second synchronization timestamp increment in the embodiment corresponding to FIG. 4A and FIG. 4B. Refer to related descriptions of the embodiment corresponding to FIG. 4A and FIG. 4B. Details are not described herein again.

In some other embodiments, the AME 1 obtains the first synchronization timestamp increment and the second synchronization timestamp increment, and the AME 1 synchronizes, based on the first synchronization timestamp increment and the second synchronization timestamp increment, the audio data packet included in the audio data stream with the drawing point data packet included in the drawing point data stream. For a manner of obtaining the first synchronization timestamp increment and the second synchronization timestamp increment, refer to related descriptions of step 905. Details are not described herein again.

In still some other embodiments, the AME 1 obtains the sequence number increment, and then performs synchronization processing based on a sequence number of the audio data packet included in the audio data stream, a sequence number of the drawing point data packet included in the drawing point data stream, and the sequence number increment. For a manner of obtaining the sequence number increment, refer to related descriptions of step 905. Details are not described herein again. A manner in which the AME 1 performs synchronization processing based on the sequence number of the audio data packet included in the audio data stream, the sequence number of the drawing point data packet included in the drawing point data stream, and the sequence number increment is similar to the manner in which the second terminal device performs synchronization based on the sequence number in the embodiment corresponding to FIG. 4A and FIG. 4B. Refer to related descriptions in the embodiment corresponding to FIG. 4A and FIG. 4B. Details are not described herein again.

In yet some other embodiments, the AME 1 obtains the audio sampling frequency and the encapsulation period of the audio data packet, and the drawing point data packet carries the video sampling frequency and the encapsulation period of the drawing point data packet. In an example, the AME 1 determines the second timestamp increment of the audio data packet based on the audio sampling frequency and the encapsulation period of the audio data packet, determines the first timestamp increment of the drawing point data packet based on the video sampling frequency and the encapsulation period of the drawing point data packet, and performs synchronization processing on the audio data packet and the drawing point data packet based on the first timestamp increment and the second timestamp increment. In another example, the AME 1 determines the second timestamp increment of the audio data packet based on the audio sampling frequency and the encapsulation period of the audio data packet, and determines the first timestamp increment of the drawing point data packet based on the video sampling frequency and the encapsulation period of the drawing point data packet. Further, the AME 1 determines the sequence number increment of the audio data packet based on the first timestamp increment and the second timestamp increment, and performs synchronization processing on the audio data packet and the drawing point data packet based on the sequence number increment.

907. The AME 1 renders, based on a synchronization processing result, the drawing point data included in the drawing point data packet to obtain a to-be-displayed user drawing pattern.

Optionally, the to-be-displayed user drawing pattern may be encapsulated in an RTP data packet or an RTCP data packet and sent to the second terminal device.

In a possible implementation, the user 1 of the first terminal device draws a user drawing pattern on a whiteboard. In this scenario, the first terminal device may not send a video image corresponding to the whiteboard to another terminal device. In this way, the AME 1 receives only the drawing point data packet and the audio data packet, and the AME 1 performs step 906. When performing rendering, the AME 1 replaces a pixel value at a corresponding position on the whiteboard with a pixel value of a drawing point included in the drawing point data packet. Alternatively, it may be described as replacing a pixel value at a corresponding position on an image obtained by previous rendering with a pixel value of a drawing point included in a currently received drawing point data packet. The timestamp or the sequence number of the data packet for encapsulating the to-be-displayed user drawing pattern may be the timestamp or the sequence number of the drawing point data packet. Alternatively, the AME 1 may re-determine, based on the audio data packet and the drawing point data packet that are synchronized, timestamps or sequence numbers for the audio data packet and a data packet that is for encapsulating the to-be-displayed user drawing pattern. This is not specifically limited in this application.

In another possible implementation, the first terminal device may mark a video image, for example, in a scenario such as remote guidance, advertising, or remote education. In this scenario, based on collecting the drawing point data, the first terminal device further collects a user video data and a user audio data in step 903. The first terminal device sends a video data stream, the audio data stream, and the drawing point data stream to another terminal device. Further, the AME 1 receives the audio data stream, the video data stream, and the drawing point data stream. The AME 1 synchronizes the audio data stream, the video data stream, and the drawing point data stream to obtain the synchronization processing result. Notably, when synchronization is performed, the audio data stream and the drawing point data stream may be synchronized in the synchronization manner provided in this embodiment of this application, and the audio data stream and the video data stream may be synchronized in an existing synchronization manner. Alternatively, the video data stream and the drawing point data stream may be synchronized in the synchronization manner provided in this embodiment of this application, and the video data stream and the audio data stream may be synchronized in an existing synchronization manner. After obtaining the synchronization processing result, the AME 1 renders the user video data of the video data stream based on the synchronization processing result to obtain a user video image, renders the drawing point data of the drawing point data stream based on the synchronization processing result to obtain the user drawing pattern, and overlays the rendered user video image and the rendered user drawing pattern (or overlays the user drawing pattern on the user video image, which is specifically replacing a pixel value at a corresponding position of the user video image with the pixel value of the drawing point included in the drawing point data packet). For example, if a video data packet 1 in the video data stream is synchronized with a drawing point data packet 1 in the drawing point data stream, a user video image obtained by rendering user video data included in the video data packet 1 and a user drawing pattern obtained by rendering drawing point data included in the drawing point data packet 1 are overlaid to obtain overlaid video data. In an example, the AME 1 may encapsulate the overlaid video data into a data packet to obtain an overlay video stream, and the data packet obtained by encapsulating the overlaid video data may be in an RTP or RTCP format. The overlaid data packet may use a timestamp or a sequence number of the video data packet 1, or may use a timestamp or a sequence number of the drawing point data packet 1. The AME 1 may further re-determine timestamps or sequence numbers for the overlaid data packet and the audio data packet based on the audio data packet and the overlaid data packet that are synchronized. This is not specifically limited in this application.

908. The AME 1 sends the to-be-displayed user drawing pattern to the first terminal device, and sends the user drawing pattern and the audio data packet to the AME 2.

909. The AME 1 sends the user drawing pattern and the audio data packet to the second terminal device by using an SFU and the AME 2.

910. The first terminal device displays the to-be-displayed user drawing pattern.

911. The second terminal device displays the to-be-displayed user drawing pattern and plays the user audio data included in the audio data packet. In an example, before displaying the to-be-displayed user drawing pattern and playing the audio data included in the audio data packet, the second terminal device may perform synchronization processing based on a time parameter of the data packet in which the user drawing pattern is encapsulated and the time parameter of the audio data packet. A synchronization processing manner is similar to the synchronization processing manner used by the AME 1, and is not specifically limited in this application.

In a possible implementation, in a process in which the first terminal device sends the audio data stream and the drawing point data stream to the AME 1, jitter may occur during network transmission, and consequently, one or more data packets in the drawing point data stream are lost. Further, a loss of a drawing point data packet causes a deviation of a user drawing pattern obtained through rendering based on a received drawing data packet. For example, refer to FIG. 8. To prevent an obvious deviation of a user drawing pattern caused by a loss of a drawing point data packet, in this embodiment of this application, the lost drawing point data is predicted in a data prediction manner, so that the predicted drawing point data is used for replacing the lost drawing point data packet during pattern drawing.

In addition, in a process in which the first terminal device sends the audio data stream and the drawing point data stream to the AME 1, network transmission may fluctuate, causing pulse-like arrival of the drawing point data packet of the drawing point data stream. Further, delayed arrival of the drawing point data packet causes a failure in supporting a rendering rate by a drawing point data packet in a receive buffer. A rate at which the AME 1 renders the drawing point data is the same as a rate at which the first terminal device collects drawing points. In this embodiment of this application, drawing point data with delayed arrival is predicted in the data prediction manner, to ensure that the rate of rendering the drawing point data is the same as the rate of collecting the drawing point. Further, when a pattern is drawn, the predicted drawing point data is first rendered. When the drawing point data with delayed arrival is subsequently received, correction processing may be performed on the predicted drawing point data with a deviation.

In an example, when receiving the drawing point data packet belonging to the drawing point data stream, the AME 1 stores the drawing point data packet in the receive buffer. Further, when rendering the drawing point data packet as the user drawing pattern, the AME 1 obtains a first drawing point data packet of the drawing point data stream from the receive buffer, performs a rendering operation on drawing point data in the first drawing point data packet. When a second drawing point data packet belonging to the drawing point data stream is not obtained from the receive buffer at a rate at which the AME 1 renders a drawing point of the user drawing pattern, the second terminal device predicts, based on the first N drawing point data packets on which rendering has been performed, second drawing point data included in the second drawing point data packet. The second drawing point data packet is a next drawing point data packet adjacent to the first drawing point data packet in the drawing point data stream. Alternatively, it may be described as follows: A sequence number of the second drawing point data packet is adjacent to a sequence number of the first drawing point data packet, and the sequence number of the second drawing point data packet is greater than the sequence number of the first drawing point data packet. Alternatively, it may be described as follows: A timestamp of the second drawing point data packet is greater than a timestamp of the first drawing point data packet, and the timestamp of the second drawing point data packet and the timestamp of the first drawing point data packet are separated by the first timestamp increment. Still further, the AME 1 renders second drawing point data based on the predicted second drawing point data packet.

In another example, after rendering the second drawing point data, when receiving the second drawing point data packet from the first terminal device, the AME 1 may replace, with second pattern data generated by rendering the second drawing point data included in the received second drawing point data packet, first pattern data generated by rendering the predicted second drawing point data. Optionally, when duration from a moment at which the second drawing point data packet from the second terminal device is received to a moment at which the predicted second drawing point data packet is rendered reaches a duration threshold, the first pattern data generated by rendering the predicted second drawing point data may no longer be replaced with the second pattern data generated by rendering the second drawing point data included in the received second drawing point data packet, and the received second drawing point data packet is discarded. The received second drawing point data packet is discarded when the second drawing point data included in the received second drawing point data packet is the same as the predicted second drawing point data or a distance between a drawing point indicated by the second drawing point data included in the received second drawing point data packet and a drawing point indicated by the predicted second drawing point data is less than a distance threshold.

In another possible implementation, because network transmission fluctuates, a plurality of drawing point data packets that belong to the drawing point data stream arrive instantaneously. In this case, when rendering drawing point data in the drawing point data packets, the AME 1 still renders the received drawing point data at the rate of rendering the drawing point of the user drawing pattern. For example, the plurality of instantaneously received drawing point data packets not only include a drawing point data packet for which prediction has been performed, but also include a drawing point data packet that newly arrives according to a receiving sequence. The AME 1 may discard the drawing point data packet for which prediction has been performed, and then render the newly received drawing point data packet at the rate of rendering the drawing point of the user drawing pattern.

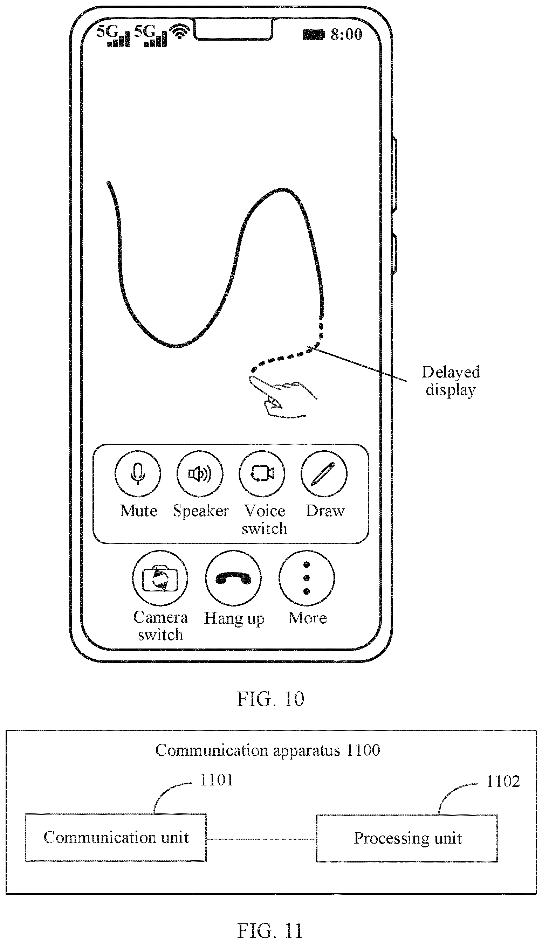

In still another possible implementation, the first terminal device sends the drawing point data to the AME 1, and then the AME 1 performs a rendering operation, and then sends, to the first terminal device, the user drawing pattern obtained by rendering the drawing point data, so that the first terminal device displays the user drawing pattern. Due to uplink and downlink time delays, a displayed user drawing pattern is deviated from a user drawing pattern actually drawn by the user. For example, there is a gap between a line head of a displayed line drawn by the user and an actual touch point of the user, for example, as shown in FIG. 10. A drawing effect is affected. To improve an experience effect of the drawer, in this embodiment of this application, a drawing manner based on device-cloud collaboration is used, and drawing point data collected by a terminal device of the drawer may be rendered to fill content presented with a delay.

In an example, after the first terminal device collects the audio data and the drawing point data, the first terminal device performs rendering based on the drawing point data to obtain the user drawing pattern, and displays the user drawing pattern obtained through rendering. After receiving the user drawing pattern from the AME 1, the first terminal device displays the user drawing pattern from the AME 1. When the first terminal device performs a rendering operation based on the drawing point data, a default line color and/or style may be used for rendering the user drawing pattern. Based on this, the user 1 can determine, based on the displayed user drawing pattern, a user drawing pattern displayed by each video call party. In this way, the user 1 can adjust a speed of describing content of the user drawing pattern, so that each video call party can accurately learn of the content described by the user 1, to improve user experience.

In another example, after the first terminal device collects the audio data and the drawing point data, the first terminal device performs rendering based on the drawing point data to obtain the user drawing pattern, and displays the user drawing pattern obtained through rendering. Then, after the user drawing pattern from the AME 1 is received, the first terminal device may discard the user drawing pattern of the AME 1.

In still another example, after the first terminal device collects the audio data and the drawing point data, the first terminal device performs rendering based on the drawing point data to obtain the user drawing pattern, and displays the user drawing pattern obtained through rendering. Correspondingly, in a case in which the AME 1 synchronously sends the to-be-displayed user drawing pattern and the data to be played to the AME 2, the AME 1 may no longer send the to-be-displayed user drawing pattern to the first terminal device. This can avoid existence of a gap between a line head of a displayed line drawn by a user and an actual touch point of the user caused by uplink and downlink delays.

Based on a same inventive concept as the method embodiments, an embodiment of this application provides a communication apparatus 1100. A structure of the apparatus 1100 is shown in FIG. 11, and the apparatus includes a communication unit 1101 and a processing unit 1102. For example, the communication unit 1101 may be configured to send a signal, or may be configured to receive a signal. Optionally, the communication unit 1101 may include a sending unit and a receiving unit. The sending unit is configured to send a signal, and the receiving unit is configured to receive a signal.

In a possible application scenario, the communication apparatus 1100 is used in a media server, and is specifically configured to implement the method performed by a media server (for example, either of the AME 1 and the AME 2) in the foregoing method embodiments.

The communication unit 1101 is configured to receive a first data stream from a first terminal device, where a data packet in the first data stream includes drawing point data, of a user drawing pattern, collected by the first terminal device.

The communication unit 1101 is further configured to receive a second data stream from the first terminal device, where a data packet in the second data stream includes user audio data and/or user video data of the first terminal device.

The processing unit 1102 is configured to synchronize the first data stream with the second data stream based on a time parameter of the data packet included in the first data stream and a time parameter of the data packet included in the second data stream to obtain a synchronization processing result.

When the data packet in the second data stream includes the user audio data, the processing unit 1102 is further configured to render the drawing point data in the data packet in the first data stream based on the synchronization processing result to obtain the user drawing pattern, and send the user drawing pattern and the second data stream to a second terminal device.

Alternatively, when the data packet in the second data stream includes the user video data, the processing unit 1102 is further configured to render the drawing point data in the data packet in the first data stream based on the synchronization processing result to obtain the user drawing pattern, render the user video data in the data packet in the second data stream based on the synchronization processing result to obtain a user video image, overlay the user drawing pattern on the user video image to obtain a third data stream, and sends the third video stream to a second terminal device.

In a possible implementation, a rate at which the media server renders a drawing point of the user drawing pattern is the same as a rate at which the first terminal device collects the drawing point of the user drawing pattern.

In a possible implementation, when a sampling frequency of the first data stream is different from a sampling frequency of the second data stream, the processing unit 1102 is specifically configured to:

when the time parameter includes a timestamp, synchronize the data packet in the first data stream with the data packet in the second data stream based on a timestamp and a first timestamp increment of the data packet in the first data stream, and a timestamp and a second timestamp increment of the data packet in the second data stream, where the first timestamp increment is a difference between timestamps of two adjacent data packets belonging to the first data stream, and the second timestamp increment is a difference between timestamps of two adjacent data packets belonging to the second data stream; or when the time parameter includes a sequence number, synchronize the data packet in the first data stream with the data packet in the second data stream based on a sequence number of the data packet in the first data stream, a sequence number of the data packet in the second data stream, and a sequence number increment, where the sequence number increment is determined based on the sampling frequency of the first data stream and the sampling frequency of the second data stream.

In a possible implementation, the processing unit 1102 is further configured to store a received data packet belonging to the first data stream in a receive buffer of the media server. When rendering the drawing point data in the data packet of the first data stream to obtain the user drawing pattern, the processing unit 1102 is specifically configured to: obtain a first data packet belonging to the first data stream from the receive buffer, and render the drawing point data of the first data packet as a first drawing point of the user drawing pattern; predict, when a second data packet belonging to the first data stream is not obtained from the receive buffer at the rate at which the media server renders the drawing point of the user drawing pattern, drawing point data of the second data packet based on first N data packets on which rendering has been performed, where

a sequence number of the second data packet is adjacent to a sequence number of the first data packet, and the sequence number of the second data packet is greater than the sequence number of the first data packet or a time threshold of an interval between a timestamp of the second data packet and a timestamp of the first data packet, where the time threshold is determined based on the sampling frequency of the first data stream and the sampling frequency of the second data stream; and render the predicted drawing point data of the second data packet as a second drawing point of the user drawing pattern.

In a possible implementation, the communication unit 1101 is further configured to receive the second data packet after the processing unit 1102 renders the predicted drawing point data of the second data packet as the second drawing point of the user drawing pattern. The processing unit 1102 is further configured to replace the second drawing point with a drawing point rendered based on the drawing point data of the received second data packet.

In a possible implementation, the first data stream is a real-time transport protocol RTP stream, and the second data stream is the RTP stream; or the first data stream is a real-time transport control protocol RTCP stream, and the second data stream is the RTCP stream.

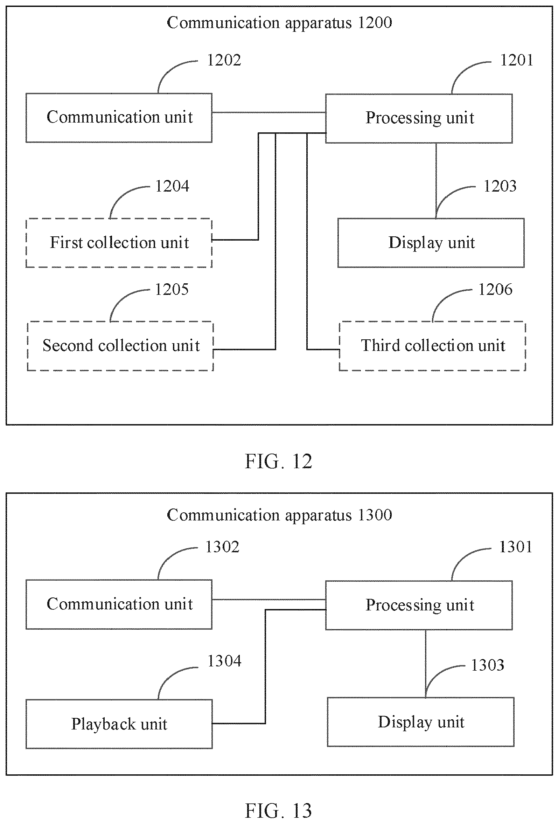

Based on a same inventive concept as the method embodiments, an embodiment of this application provides a communication apparatus 1200. A structure of the apparatus 1200 is shown in FIG. 12, and the apparatus includes a processing unit 1201, a communication unit 1202, and a display unit 1203. For example, the communication unit 1202 may be configured to send a signal, or may be configured to receive a signal. Optionally, the communication unit 1202 may include a sending unit and a receiving unit. The sending unit is configured to send a signal, and the receiving unit is configured to receive a signal. The communication apparatus 1200 is used in a terminal device, and is specifically configured to implement the method performed by a terminal device (for example, the first terminal device) in the foregoing method embodiments.

The processing unit 1201 collects, in response to a drawing operation for a user drawing pattern of the first terminal device, a drawing point of the user drawing pattern in real time to obtain drawing point data.

In an example, the apparatus 1200 may further include a first collection unit 1204. The processing unit 1201 collects the drawing point data by using the first collection unit 1204.

The processing unit 1201 collects multimedia data in real time, where the multimedia data includes user audio data of the first terminal device or user video data of the first terminal device.

The apparatus 1200 may further include a second collection unit 1205 or a third collection unit 1206. The processing unit 1201 collects the user audio data by using the second collection unit 1205. The processing unit 1201 collects the user video data by using the third collection unit 1206.

The processing unit 1201 is further configured to encapsulate the drawing point data of the user drawing pattern collected in real time into a data packet belonging to a first data stream, and encapsulate the multimedia data collected in real time into a data packet belonging to a second data stream, where the data packet in the first data stream includes the drawing point data of the user drawing pattern, the data packet in the second data stream includes the user audio data or the user video data of the first terminal device, the data packet in the first data stream carries a first timestamp, and the data packet in the second data stream carries a second timestamp, where the first timestamp and the second timestamp are determined based on a sampling frequency of the drawing point of the user drawing pattern and a sampling frequency of the user video data or the user audio data encapsulated in the second data packet.

The communication unit 1202 sends the first data stream and the second data stream to a media server by using a session border controller SBC.

In a possible implementation, the processing unit 1201 is further configured to render the drawing point data to obtain the user drawing pattern and display the user drawing pattern.

In a possible implementation, the communication unit 1202 is further configured to receive a first user drawing pattern from the media server by using the SBC, where the first user drawing pattern is obtained by the media server by rendering the drawing point data in the data packet in the first data stream.

The display unit 1203 is configured to display the first user drawing pattern.

In a possible implementation, the processing unit 1201 is further configured to: before the communication unit 1202 receives the first user drawing pattern from the media server by using the SBC, render the drawing point data to obtain a second user drawing pattern and display the second user drawing pattern.

The display unit 1203 is further configured to display the first user drawing pattern after the communication unit 1202 receives the first user drawing pattern from the media server by using the SBC, where the displayed first user drawing pattern covers the second user drawing pattern.

In a possible implementation, the first data stream is a real-time transport protocol RTP stream, and the second data stream is the RTP stream; or the first data stream is a real-time transport control protocol RTCP stream, and the second data stream is the RTCP stream.

Based on a same inventive concept as the method embodiments, an embodiment of this application provides a communication apparatus 1300. A structure of the apparatus 1300 is shown in FIG. 13, and the apparatus includes a processing unit 1301, a communication unit 1302, a display unit 1303, and a playback unit 1304. For example, the communication unit 1302 may be configured to send a signal, or may be configured to receive a signal. Optionally, the communication unit 1302 may include a sending unit and a receiving unit. The sending unit is configured to send a signal, and the receiving unit is configured to receive a signal. The communication apparatus 1300 is used in a terminal device, and is specifically configured to implement the method performed by a terminal device (for example, the second terminal device) in the foregoing method embodiments.

The communication unit 1302 is configured to receive a first data stream from a media server, where a data packet in the first data stream includes drawing point data, collected by a first terminal device, of a user drawing pattern.

The communication unit 1302 is further configured to receive a second data stream from the media server, where a data packet in the second data stream includes user audio data and/or user video data of the first terminal device.

The processing unit 1301 is configured to synchronize the first data stream with the second data stream based on a time parameter of the data packet in the first data stream and a time parameter of the data packet in the second data stream to obtain a synchronization processing result.

When the data packet in the second data stream includes the user audio data, the processing unit 1301 is configured to render the drawing point data in the data packet in the first data stream based on the synchronization processing result to obtain the user drawing pattern. The display unit 1303 displays the user drawing pattern. The playback unit 1304 plays the user audio data.

Alternatively, when the data packet in the second data stream includes the user video data, the processing unit 1301 is configured to render the drawing point data in the data packet in the first data stream based on the synchronization processing result to obtain the user drawing pattern, render the user video data in the data packet in the second data stream based on the synchronization processing result to obtain a user video image, and overlay the user drawing pattern on the user video image. The display unit 1303 displays the user drawing pattern that overlays on the user video image.

In a possible implementation, a rate at which the second terminal device renders a drawing point of the user drawing pattern is the same as a rate at which the first terminal device collects the drawing point of the user drawing pattern.

In a possible implementation, when a sampling frequency of the first data stream is different from a sampling frequency of the second data stream, when synchronizing the first data stream with the second data stream based on a time parameter of the data packet in the first data stream and a time parameter of the data packet in the second data stream, the processing unit 1301 is specifically configured to:

when the time parameter includes a timestamp, synchronize the data packet in the first data stream with the data packet in the second data stream based on a timestamp and a first timestamp increment of the data packet in the first data stream, and a timestamp and a second timestamp increment of the data packet in the second data stream, where the first timestamp increment is a difference between timestamps of two adjacent data packets belonging to the first data stream, and the second timestamp increment is a difference between timestamps of two adjacent data packets belonging to the second data stream; or when the time parameter includes a sequence number, synchronize the data packet in the first data stream with the data packet in the second data stream based on a sequence number of the data packet in the first data stream, a sequence number of the data packet in the second data stream, and a sequence number increment, where the sequence number increment is determined based on the sampling frequency of the first data stream and the sampling frequency of the second data stream.

In a possible implementation, the processing unit 1301 stores a received data packet belonging to the first data stream in a receive buffer.

When rendering the drawing point data in the data packet in the first data stream to obtain the user drawing pattern, the processing unit 1301 is specifically configured to:

obtain a first data packet belonging to the first data stream from the receive buffer, and render the drawing point data of the first data packet as a first drawing point of the user drawing pattern; predict, when a second data packet belonging to the first data stream is not obtained from the receive buffer based on the rate at which the second terminal device renders the drawing point of the user drawing pattern, drawing point data of the second data packet based on first N data packets that belong to the first data stream and on which rendering has been performed, where a sequence number of the second data packet is adjacent to a sequence number of the first data packet, and the sequence number of the second data packet is greater than the sequence number of the first data packet or a time threshold of an interval between a timestamp of the second data packet and a timestamp of the first data packet, where the time threshold is determined based on the sampling frequency of the first data stream and the sampling frequency of the second data stream; and render the predicted drawing point data of the second data packet as a second drawing point of the user drawing pattern.

In a possible implementation, the communication unit 1302 receives the second data packet after the processing unit 1301 renders the predicted drawing point data of the second data packet as the second drawing point of the user drawing pattern. The processing unit 1301 replaces the second drawing point with the drawing point rendered based on the received second data packet.

In a possible implementation, the first data stream is a real-time transport protocol RTP stream, and the second data stream is the RTP stream; or the first data stream is a real-time transport control protocol RTCP stream, and the second data stream is the RTCP stream

Division into units in embodiments of this application is an example and is merely logical function division, and there may be another division manner during actual implementation. In addition, the functional units in embodiments of this application may be integrated into one processor, each of the units may exist alone physically, or two or more units are integrated into one module. The integrated unit may be implemented in a form of hardware, or may be implemented in a form of a software functional module.

In embodiments of this application, the media server and the terminal device each may be presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions.

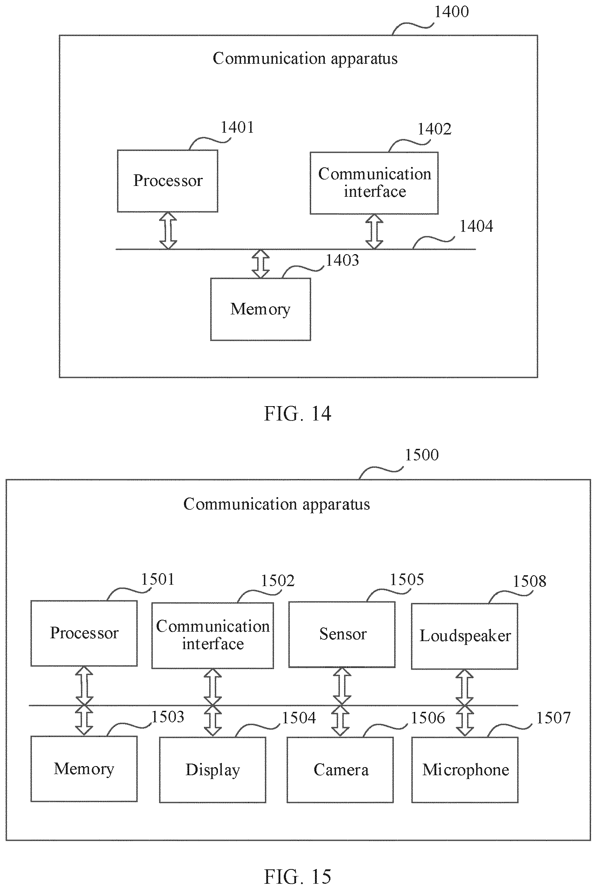

In a simple embodiment, the SBC, the media server, or the application server may use a form shown in FIG. 14.

An apparatus 1400 shown in FIG. 14 includes at least one processor 1401 and a communication interface 1402. Optionally, the apparatus may further include a memory 1403.

In a possible implementation, when the media server is in the form shown in FIG. 14, the processor 1401 in FIG. 14 may invoke computer-executable instructions stored in the memory 1403, so that the media server can perform the method performed by the media server in any one of the foregoing method embodiments.

The processor 1401 may communicate with another device through the communication interface 1402. For example, the processor 1401 receives, through the communication interface 1402, a first data stream and a second data stream that are from a first terminal device, and sends the first data stream and the second data stream or sends a user drawing pattern and an audio data stream to a second terminal device.

In an example, the memory 1403 stores computer-executable instructions for implementing functions of the communication unit 1101 and the processing unit 1102 in FIG. 11. All functions/implementation processes of the communication unit 1101 and the processing unit 1102 in FIG. 14 may be implemented by invoking, by the processor 1401 in FIG. 14, the computer-executable instructions stored in the memory 1403 in combination with the communication interface 1402. In another example, a function of the communication unit 1101 in FIG. 11 is implemented by the communication interface 1402, and the processor 1401 implements a function of the processing unit 1102.

In another possible implementation, when the SBC is in the form shown in FIG. 14, the processor 1401 in FIG. 14 may invoke computer-executable instructions stored in the memory 1403, so that the SBC can perform the method performed by the SBC 1 or the SBC 2 in any one of the foregoing method embodiments.

In this embodiment of this application, a specific connection medium between the processor 1401 and the memory 1403 is not limited. In this embodiment of this application, in the figure, the memory 1403 and the processor 1401 are connected through a bus 1404. The bus 1404 is represented by a bold line in the FIG. 14. A connection manner between other components is described merely as an example and does not constitute any limitation. The bus 1404 may be classified as an address bus, a data bus, a control bus, or the like. For ease of representation, only one bold line is used for representing the bus in FIG. 14, but this does not mean that there is only one bus or only one type of bus.

In a simple embodiment, the terminal device may be in a form shown in FIG. 15. An apparatus 1500 shown in FIG. 15 includes at least one processor 1501 and a communication interface 1502, and optionally may further include a memory 1503. In a possible implementation, the apparatus 1500 further includes a display 1504. The apparatus may further include a sensor 1505, a camera 1506, a microphone 1507, and a loudspeaker 1508. For example, the sensor 1505 may be a touch panel.

The processor 1501 may have data receiving and sending functions, and can communicate with another device. For example, in this embodiment of this application, the processor 1501 may send a media stream to an SBC, or may receive a media stream from the SBC. In the apparatus shown in FIG. 15, an independent data receiving and sending module, for example, a communication interface 1502, may be disposed, to receive and send data. When communicating with another device, the processor 1501 may perform data transmission through the communication interface 1502. For example, in this embodiment of this application, the processor 1501 may send a drawing point data stream, an audio data stream, and a video data stream to the SBC through the communication interface 1502, or may receive a drawing point data stream, an audio data stream, and a video data stream from the SBC through the communication interface 1502.

When the terminal device is in the form shown in FIG. 15, the processor 1501 in FIG. 15 may invoke computer-executable instructions stored in the memory 1503, so that the terminal device may perform the method performed by the terminal device (for example, the first terminal device to the second terminal device) in any one of the foregoing method embodiments.

In an example, the memory 1503 stores computer-executable instructions for implementing functions of the communication unit 1202, the display unit 1203, the processing unit 1201, the first collection unit 1204, the second collection unit 1205, and the third collection unit 1206 in FIG. 12. All functions/implementation processes of the communication unit 1202, the display unit 1203, the processing unit 1201, the first collection unit 1204, the second collection unit 1205, and the third collection unit 1206 in FIG. 12 may be implemented by the processor 1501 in FIG. 15 by invoking the computer-executable instructions stored in the memory 1503.

In another example, the memory 1503 stores computer-executable instructions for implementing a function of the display unit 1203 in FIG. 12. A function/implementation process of the display unit 1203 in FIG. 12 may be implemented by the processor 1501 in FIG. 15 by invoking the computer-executable instructions stored in the memory 1503, and a function/implementation process of the communication unit in FIG. 12 may be implemented by the communication interface 1502 in FIG. 15.

When the processor 1501 performs the function of the display unit 1203, if an operation of displaying an image, for example, displaying a user drawing pattern, is involved, the processor 1501 may display the image by using the display 1504 in the apparatus 1500. Optionally, when performing the function of the display unit, the processor 1501 may display an image by using a display in another device, for example, send a display instruction to the another device, to indicate to display the image.

When the processor 1501 performs the function of the first collection unit 1204, the processor 1501 may collect drawing point data by using the sensor 1505. When the processor 1501 performs the function of the second collection unit 1205, the processor 1501 may collect user audio data by using the microphone 1507. The microphone 1507 may alternatively be disposed outside the apparatus 1500. When the processor 1501 performs the function of the third collection unit 1206, the processor 1501 may collect user video data by using the camera 1506. The camera 1506 may alternatively be disposed outside the apparatus 1500.

In still another example, the memory 1503 stores computer-executable instructions for implementing functions of the communication unit 1302, the display unit 1303, the processing unit 1301, and the playback unit 1304 in FIG. 13. All functions/implementation processes of the communication unit 1302, the display unit 1303, the processing unit 1301, and the playback unit 1304 in FIG. 13 may be implemented by the processor 1501 in FIG. 15 by invoking the computer-executable instructions stored in the memory 1503.

When the processor 1501 performs the function of the display unit 1303, if an operation of displaying an image, for example, displaying a user drawing pattern, is involved, the processor 1501 may display the image by using the display 1504 in the apparatus 1500. Optionally, when performing the function of the display unit, the processor 1501 may display an image by using a display in another device, for example, send a display instruction to the another device, to indicate to display the image.

When the processor 1501 performs the function of the playback unit 1304, if an operation of playing audio data is involved, the processor 1501 may play user audio data by using the loudspeaker 1508 in the apparatus 1500. Optionally, when performing the function of playing the user audio data, the processor 1501 may alternatively play the user audio data by using a loudspeaker in another device, for example, send the user audio data to the another device.

In this embodiment of this application, specific connection media between the processor 1501, the memory 1503, the communication interface 1502, the display 1504, the sensor 1505, the camera 1506, the microphone 1507, and the loudspeaker 1508 are not limited. In this embodiment of this application, connection by using a bus is used as an example in the figure. The bus is represented by using one bold line in the figure. A connection manner between other components is merely an example for description, and is not limited thereto. The bus may be classified as an address bus, a data bus, a control bus, and the like. For ease of representation, only one bold line is used for representing the bus in FIG. 15, but this does not mean that there is only one bus or only one type of bus.

Based on the foregoing embodiments, an embodiment of this application further provides a computer storage medium. The storage medium stores a software program. When the software program is read and executed by one or more processors, the method provided in any one or more of the foregoing embodiments may be implemented. The computer storage medium may include any medium that can store program code, such as a removable hard disk, a read-only memory, a random access memory, a magnetic disk, or an optical disc.

Based on the foregoing embodiments, an embodiment of this application further provides a chip system. The chip system includes a processor, configured to implement a function of the media server or a function of the terminal device in any one or more of the foregoing embodiments. Optionally, the chip system further includes a memory, and the memory is configured to store necessary program instructions and data that executed by the processor. The chip system may include a chip, or may include a chip and another discrete device.

It can be understood that "an embodiment", "an implementation", or "an example" mentioned in the entire specification means that particular features, structures, or characteristics related to embodiments are included in at least one embodiment of this application. Therefore, "in an embodiment", "in an implementation", or "in an example" appearing throughout the specification does not necessarily refer to a same embodiment. In addition, these particular features, structures, or characteristics may be combined in one or more embodiments by using any appropriate manner. It can be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. The term "at least one" in this application means one or more, that is, includes one, two, three, or more; and the term "a plurality of" means two or more, that is, includes two, three, or more. In addition, it can be understood that in the descriptions of this application, terms such as "first" and "second" are merely used for distinguishing and description, but should not be understood as indicating or implying relative importance, or should not be understood as indicating or implying a sequence. At least one of the following items (pieces) or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural. It can be understood that in embodiments of this application, "B corresponding to A" indicates that B is associated with A, and B may be determined according to A. However, it can be further understood that determining B based on A does not mean that B is determined based only on A. B may alternatively be determined based on A and/or other information. In addition, the terms "include" and "have" in embodiments, claims, and accompanying drawings of this application are not exclusive. For example, a process, a method, a system, a product, or a device that includes a series of steps or modules is not limited to the listed steps or modules, and may further include steps or modules that are not listed.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may exist in the network device or the terminal device as discrete components.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

## Claims

1. A video call method, comprising:

   receiving, by a media server, a first data stream from a first terminal device, wherein a data packet in the first data stream comprises drawing point data, of a user drawing pattern, collected by the first terminal device;
   receiving, by the media server, a second data stream from the first terminal device, wherein a data packet in the second data stream comprises user audio data and/or user video data of the first terminal device;
   synchronizing, by the media server, the first data stream with the second data stream based on a time parameter of the data packet in the first data stream and a time parameter of the data packet in the second data stream to obtain a synchronization processing result; and

   when the data packet in the second data stream comprises the user audio data, rendering, by the media server, the drawing point data in the data packet in the first data stream based on the synchronization processing result to obtain the user drawing pattern, and sending the user drawing pattern and the second data stream to a second terminal device; or
   when the data packet in the second data stream comprises the user video data, rendering, by the media server, the drawing point data in the data packet in the first data stream based on the synchronization processing result to obtain the user drawing pattern, rendering the user video data in the data packet in the second data stream based on the synchronization processing result to obtain a user video image, overlaying the user drawing pattern on the user video image to obtain a third data stream, and sending the third video stream to a second terminal device.

2. The method according to claim 1, wherein a rate at which the media server renders a drawing point of the user drawing pattern is the same as a rate at which the first terminal device collects a drawing point of the user drawing pattern.

3. The method according to claim 2, wherein when a sampling frequency of the first data stream is different from a sampling frequency of the second data stream, the synchronizing, by the media server, the first data stream with the second data stream based on a time parameter of the data packet in the first data stream and a time parameter of the data packet in the second data stream comprises:

   when the time parameter comprises a timestamp, synchronizing, by the media server, the data packet in the first data stream with the data packet in the second data stream based on a timestamp and a first timestamp increment of the data packet in the first data stream and a timestamp and a second timestamp increment of the data packet in the second data stream, wherein the first timestamp increment is a difference between timestamps of two adjacent data packets belonging to the first data stream, and the second timestamp increment is a difference between timestamps of two adjacent data packets belonging to the second data stream; or when the time parameter comprises a sequence number, synchronizing, by the media server, the data packet in the first data stream with the data packet in the second data stream based on a sequence number of the data packet in the first data stream, a sequence number of the data packet in the second data stream, and a sequence number increment, wherein the sequence number increment is determined based on the sampling frequency of the first data stream and the sampling frequency of the second data stream.

4. The method according to claim 2 or 3, wherein the method further comprises:

   storing, by the media server, a received data packet belonging to the first data stream in a receive buffer; and
   the rendering the drawing point data in the data packet in the first data stream to obtain the user drawing pattern comprises:

      obtaining, by the media server from the receive buffer, a first data packet belonging to the first data stream, and rendering drawing point data in the first data packet as a first drawing point of the user drawing pattern; predicting, when a second data packet belonging to the first data stream is not obtained from the receive buffer at the rate at which the media server renders the drawing point of the user drawing pattern, drawing point data of the second data packet based on first N data packets on which rendering has been performed, wherein
      a sequence number of the second data packet is adjacent to a sequence number of the first data packet, and the sequence number of the second data packet is greater than the sequence number of the first data packet or a time threshold of an interval between a timestamp of the second data packet and a timestamp of the first data packet, wherein the time threshold is determined based on the sampling frequency of the first data stream and the sampling frequency of the second data stream; and
      rendering the predicted drawing point data of the second data packet as a second drawing point of the user drawing pattern.

5. The method according to claim 4, wherein after the rendering the predicted drawing point data of the second data packet as a second drawing point of the user drawing pattern, the method further comprises: replacing, when the second data packet is received, the second drawing point with a drawing point rendered based on the drawing point data of the received second data packet.

6. The method according to any one of claims 1 to 5, wherein the first data stream is a real-time transport protocol RTP stream, and the second data stream is an RTP stream; or the first data stream is a real-time transport control protocol RTCP stream, and the second data stream is an RTCP stream.

7. A video call method, comprising:

   receiving, by a second terminal device, a first data stream from a media server, wherein a data packet in the first data stream comprises drawing point data of a user drawing pattern collected by a first terminal device;
   receiving, by the second terminal device, a second data stream from the media server, wherein a data packet in the second data stream comprises user audio data and/or user video data of the first terminal device;
   synchronizing, by the second terminal device, the first data stream with the second data stream based on a time parameter of the data packet in the first data stream and a time parameter of the data packet in the second data stream to obtain a synchronization processing result; and

when the data packet in the second data stream comprises the user audio data, rendering, by the second terminal device, the drawing point data in the data packet in the first data stream based on the synchronization processing result to obtain the user drawing pattern, displaying the user drawing pattern, and playing user audio; or
when the data packet in the second data stream comprises the user video data, rendering, by the second terminal device, the drawing point data in the data packet in the first data stream based on the synchronization processing result to obtain the user drawing pattern, rendering the user video data in the data packet in the second data stream based on the synchronization processing result to obtain a user video image, and overlaying the user drawing pattern on the user video image for display.

8. The method according to claim 7, wherein a rate at which the second terminal device renders a drawing point of the user drawing pattern is the same as a rate at which the first terminal device collects a drawing point of the user drawing pattern.

9. The method according to claim 7 or 8, wherein when a sampling frequency of the first data stream is different from a sampling frequency of the second data stream, the synchronizing, by the second terminal device, the first data stream with the second data stream based on a time parameter of the data packet in the first data stream and a time parameter of the data packet in the second data stream comprises:

when the time parameter comprises a timestamp, synchronizing, by the second terminal device, the data packet in the first data stream with the data packet in the second data stream based on a timestamp and a first timestamp increment of the data packet in the first data stream and a timestamp and a second timestamp increment of the data packet in the second data stream, wherein the first timestamp increment is a difference between timestamps of two adjacent data packets belonging to the first data stream, and the second timestamp increment is a difference between timestamps of two adjacent data packets belonging to the second data stream; or
when the time parameter comprises a sequence number, synchronizing, by the second terminal device, the data packet in the first data stream with the data packet in the second data stream based on a sequence number of the data packet in the first data stream, a sequence number of the data packet in the second data stream, and a sequence number increment, wherein the sequence number increment is determined based on the sampling frequency of the first data stream and the sampling frequency of the second data stream.

10. The method according to claim 8 or 9, wherein the method further comprises:

storing, by the second terminal device, a received data packet belonging to the first data stream in a receive buffer; and
the rendering, by the second terminal device, the drawing point data in the data packet in the first data stream to obtain the user drawing pattern comprises:

obtaining, by the second terminal device, a first data packet belonging to the first data stream from the receive buffer, and rendering drawing point data of the first data packet as a first drawing point of the user drawing pattern; predicting, when a second data packet belonging to the first data stream is not obtained from the receive buffer at the rate at which the second terminal device renders the drawing point of the user drawing pattern, drawing point data of the second data packet based on first N data packets that belong to the first data stream and on which rendering has been performed, wherein a sequence number of the second data packet is adjacent to a sequence number of the first data packet, and the sequence number of the second data packet is greater than the sequence number of the first data packet or a time threshold of an interval between a timestamp of the second data packet and a timestamp of the first data packet, wherein the time threshold is determined based on the sampling frequency of the first data stream and the sampling frequency of the second data stream; and
rendering the predicted drawing point data of the second data packet as a second drawing point of the user drawing pattern.

11. The method according to claim 10, wherein after rendering the predicted drawing point data of the second data packet as a second drawing point of the user drawing pattern, the method further comprises:
replacing, when the second data packet is received, the second drawing point with a drawing point rendered based on the drawing point data of the received second data packet.

12. The method according to any one of claims 7 to 11, wherein the first data stream is a real-time transport protocol RTP stream, and the second data stream is an RTP stream; or the first data stream is a real-time transport control protocol RTCP stream, and the second data stream is an RTCP stream.

13. A video call method, comprising:

collecting, by a first terminal device in response to a drawing operation for a user drawing pattern of the first terminal device, a drawing point of the user drawing pattern in real time to obtain drawing point data;
collecting, by the first terminal device, multimedia data in real time, wherein the multimedia data comprises user audio data of the first terminal device or user video data of the first terminal device;
encapsulating, by the first terminal device, the drawing point data of the user drawing pattern collected in real time into a data packet belonging to a first data stream, and encapsulating the multimedia data collected in real time into a data packet belonging to a second data stream, wherein the data packet in the first data stream comprises the drawing point data of the user drawing pattern, the data packet in the second data stream comprises the user audio data or the user video data of the first terminal device, the data packet in the first data stream carries a first timestamp, and the data packet in the second data stream carries a second timestamp, wherein the first timestamp and the second timestamp are determined based on a sampling frequency of the drawing point of the user drawing pattern and a sampling frequency of the user video data or the user audio data encapsulated in the second data packet; and
sending, by the first terminal device, the first data stream and the second data stream to a media server by using a session border controller SBC.

14. The method according to claim 13, further comprising:
rendering, by the first terminal device, the drawing point data to obtain the user drawing pattern, and displaying the user drawing pattern.

15. The method according to claim 13, further comprising:

receiving, by the first terminal device, a first user drawing pattern from the media server by using the SBC, wherein the first user drawing pattern is obtained by the media server by rendering the drawing point data in the data packet in the first data stream; and
displaying, by the first terminal device, the first user drawing pattern.

16. The method according to claim 15, wherein before the receiving, by the first terminal device, a first user drawing pattern from the media server by using the SBC, the method further comprises:

rendering, by the first terminal device, the drawing point data to obtain a second user drawing pattern, and displaying the second user drawing pattern; and
displaying, by the first terminal device, the first user drawing pattern after receiving the first user drawing pattern from the media server by using the SBC, wherein the displayed first user drawing pattern covers the second user drawing pattern.

17. The method according to any one of claims 13 to 16, wherein the first data stream is a real-time transport protocol RTP stream, and the second data stream is an RTP stream; or the first data stream is a real-time transport control protocol RTCP stream, and the second data stream is an RTCP stream.

18. A communication apparatus, wherein the apparatus comprises a communication interface and a processor;

the communication interface is configured to receive and send a signal; and
the processor is configured to receive and send a signal through the communication interface, and implement the method according to any one of claims 1 to 6.

19. A communication apparatus, wherein the apparatus comprises a communication interface, a processor, a display, and a player;

the communication interface is configured to receive and send a signal; and
the display is configured to display a user drawing pattern;
the player is configured to play user audio data; and
the processor is configured to receive and send a signal through the communication interface, and implement the method according to any one of claims 7 to 12 or the method according to any one of claims 13 to 17.

20. A computer-readable storage medium, wherein the computer-readable storage medium stores instructions; and when the instructions are run on a computer, the computer is enabled to perform the method according to any one of claims 1 to 17.

FIG. 1

FIG. 2

FIG. 3

| First terminal device | AME 1 | SFU | AME 2 | Second terminal device |
|---|---|---|---|---|

401. Collect a drawing point generated when a user 1 draws a pattern, to obtain drawing point data

402. Encapsulate the collected drawing point data to obtain a data packet belonging to a first data stream

403. Collect multimedia data generated in a process of a video call between the first terminal device and the second terminal device

404. Encapsulate the collected multimedia data to obtain a data packet belonging to a second data stream

TO FIG. 4B     TO FIG. 4B     TO FIG. 4B     TO FIG. 4B     TO FIG. 4B

FIG. 4A

CONT. FROM     CONT. FROM     CONT. FROM     CONT. FROM     CONT. FROM
   FIG. 4A         FIG. 4A         FIG. 4A         FIG. 4A         FIG. 4A

406. Audio data
stream and       407. Audio data
drawing point    stream and
data stream      drawing point        408. Audio data
                 data stream          stream and
                                      drawing point
                                      data stream

405. The first
terminal device
renders a user
drawing pattern based
on the drawing point
data, displays the user
drawing pattern, and
plays user audio data

409. Perform
synchronization
processing based on a time
parameter of an audio data
packet included in the
audio data stream and a
time parameter of a
drawing point data packet
included in the drawing
point data stream

410. Render the drawing
point data included in the
drawing point data packet
as the user drawing
pattern, play, based on a
synchronization
processing result of the
audio data packet and the
drawing point data packet,
the audio data included in
the audio data packet, and
display the user drawing
pattern

FIG. 4B

36

FIG. 5A

FIG. 5B

FIG. 5C

FIG. 5D

FIG. 6

Receive →

| Audio data packet | Data packet n | Data packet n+1 | Data packet n+2 | ... | Data packet n+19 | ... | Data packet n+39 |
|---|---|---|---|---|---|---|---|
| | T | T+160 | T+320 | | T+3040 | | T+6080 |

| Drawing point data packet | Data packet n | | | | Data packet n+1 | | Data packet n+2 |
|---|---|---|---|---|---|---|---|
| | T | | | | T+3000 | | T+6000 |

FIG. 7

FIG. 8

| First terminal device | AME 1 | SFU | AME 2 | Second terminal device |
|---|---|---|---|---|

901. Collect a drawing point generated when a user 1 draws a pattern, to obtain drawing point data

902. Encapsulate the collected drawing point data to obtain a data packet belonging to a first data stream

903. Collect multimedia data generated in a process of a video call between the first terminal device and the second terminal device

904. Encapsulate the collected multimedia data to obtain a data packet belonging to a second data stream

TO FIG. 9B      TO FIG. 9B      TO FIG. 9B      TO FIG. 9B      TO FIG. 9B

FIG. 9A

CONT. FROM     CONT. FROM     CONT. FROM     CONT. FROM     CONT. FROM
  FIG. 9A        FIG. 9A        FIG. 9A        FIG. 9A        FIG. 9A

905. Audio
data stream and
drawing point
data stream

906. Perform synchronization
processing based on a time
parameter of an audio data
packet included in the audio
data stream and a time
parameter of a drawing point
data packet included in the
drawing point data stream

907. Render, based on a
synchronization processing
result, the drawing point data
included in the drawing point
data packet to obtain a to-be-
displayed user drawing pattern

908. To-be-
displayed user
drawing pattern

909. User
drawing pattern
and audio data
stream

909. User
drawing pattern
and audio data
stream

910. Display the
to-be-displayed
user pattern data

911. Display the to-be-
displayed user pattern data
and play user audio data of
the audio data packet

FIG. 9B

Delayed display

Mute  Speaker  Voice switch  Draw

Camera switch  Hang up  More

FIG. 10

Communication apparatus 1100

1101

1102

Communication unit

Processing unit

FIG. 11

Communication apparatus 1200

1202

Communication unit

1201

Processing unit

1204

First collection unit

1203

Display unit

1205

Second collection unit

1206

Third collection unit

FIG. 12

Communication apparatus 1300

1302

Communication unit

1301

Processing unit

1304

Playback unit

1303

Display unit

FIG. 13

1400

Communication apparatus

1401

Processor

1402

Communication interface

1404

1403

Memory

FIG. 14

1500

Communication apparatus

1501

Processor

1502

Communication interface

1505

Sensor

1508

Loudspeaker

1503

Memory

1504

Display

1506

Camera

1507

Microphone

FIG. 15

## INTERNATIONAL SEARCH REPORT

| | International application No. |
|---|---|
| | **PCT/CN2021/108137** |

| **A.** | **CLASSIFICATION OF SUBJECT MATTER** |
|---|---|
| | H04N 7/14(2006.01)i |

According to International Patent Classification (IPC) or to both national classification and IPC

| **B.** | **FIELDS SEARCHED** |
|---|---|

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, CNKI, CNTXT, VEN, USTXT, EPTXT, WOTXT: 绘制点, 音频, 视频, 视频通话, 视频会议, 时间戳, 同步, 叠加, 重叠, 图像, 白板, 绘图板, 通话, 渲染, 采样, 流媒体, 服务器, video conference, video call, whiteboard, drawing point, timestamp, synchronization. audio, superposition, image, video, rendering, sampling, stream, server

| **C.** | **DOCUMENTS CONSIDERED TO BE RELEVANT** | |
|---|---|---|
| Category* | Citation of document, with indication, where appropriate, of the relevant passages | Relevant to claim No. |
| X | CN 109547831 A (WANGSU SCIENCE & TECHNOLOGY CO., LTD.) 29 March 2019 (2019-03-29) description paragraphs 0069-0081, 0094 | 13-17 |
| Y | CN 109547831 A (WANGSU SCIENCE & TECHNOLOGY CO., LTD.) 29 March 2019 (2019-03-29) description paragraphs 0069-0081, 0094 | 1-2, 6-8, 12, 18-20 |
| Y | CN 111124333 A (BEIJING VISIONVERA INT INF TECH. CO., LTD.) 08 May 2020 (2020-05-08) description paragraph 0123 | 1-2, 6-8, 12, 18-20 |
| A | CN 110113554 A (UBEI PANDUOLA NETWORK TECHNOLOGY CO., LTD.) 09 August 2019 (2019-08-09) entire document | 1-20 |
| A | CN 202957917 U (GUILIN ONESTONE MEDIA TECHNOLOGY CO., LTD.) 29 May 2013 (2013-05-29) entire document | 1-20 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 September 2021** | **13 October 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/108137** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 107067845 A (SHENZHEN VISTANDARD DIGITAL TECHNOLOGY CO., LTD.) 18 August 2017 (2017-08-18)<br>       entire document | 1-20 |
| A | CN 103269346 A (WEN, Caiyi; LAO, Yongchao) 28 August 2013 (2013-08-28)<br>       entire document | 1-20 |
| A | US 2012204120 A1 (LEFAR MARC P et al.) 09 August 2012 (2012-08-09)<br>       entire document | 1-20 |
| A | US 8706861 B2 (MENEZES PASCAL et al.) 22 April 2014 (2014-04-22)<br>       entire document | 1-20 |

**INTERNATIONAL SEARCH REPORT**
Information on patent family members

International application No.

**PCT/CN2021/108137**

| Patent document cited in search report | | | Publication date (day/month/year) | Patent family member(s) | | | Publication date (day/month/year) |
|---|---|---|---|---|---|---|---|
| CN | 109547831 | A | 29 March 2019 | WO | 2020103203 | A1 | 28 May 2020 |
| | | | | CN | 109547831 | B | 01 June 2021 |
| CN | 111124333 | A | 08 May 2020 | None | | | |
| CN | 110113554 | A | 09 August 2019 | None | | | |
| CN | 202957917 | U | 29 May 2013 | None | | | |
| CN | 107067845 | A | 18 August 2017 | None | | | |
| CN | 103269346 | A | 28 August 2013 | None | | | |
| US | 2012204120 | A1 | 09 August 2012 | None | | | |
| US | 8706861 | B2 | 22 April 2014 | US | 9596063 | B2 | 14 March 2017 |
| | | | | US | 2014229586 | A1 | 14 August 2014 |
| | | | | US | 2013067042 | A1 | 14 March 2013 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202011025141